# EUROPEAN PATENT APPLICATION

(11) **EP 4 364 951 A1**
(43) Date of publication of application: **08.05.2024**
(21) Application number: 22833120.3
(22) Date of filing: 27.06.2022
(51) Int. Cl.: B41J 2/01, C09D 11/30, C09D 11/54, B41M 5/00

(54) **OVERCOAT INK AND INK SET CONTAINING SAME**

(30) Priority: 30.06.2021 JP 2021109294
(71) Applicant: DNP Fine Chemicals Co., Ltd., Yokohama-shi, Kanagawa 226-0022 (JP)
(72) Inventor: MOROZUMI, Syunya, Yokohama-shi Kanagawa 226-0022 (JP); MAKIMOTO, Yuji, Yokohama-shi Kanagawa 226-0022 (JP)
(74) Representative: Hasegawa, Kan
(86) International application number: PCT/JP2022/025620
(87) International publication number: WO 2023/276973

(57) **Abstract**

The present invention provides an overcoat ink which is capable of forming an overcoat layer that has high lubricity on the surface of a recorded material. An overcoat ink for forming an overcoat layer on the surface of a recorded material, the overcoat ink containing at least a resin, an organic solvent and water. With respect to this overcoat ink, the resin contains (a) a resin having a glass transition temperature of 20°C or more and/or (b) a styrene acrylic resin having a glass transition temperature of 6°C or more.

## Description

### TECHNICAL FIELD

The present invention relates to an overcoat ink and an ink set including the overcoat ink.

### BACKGROUND ART

Inkjet recording method is a recoding method including ejecting droplets of an ink composition from a very fine nozzle directly onto a substrate, such as a paper sheet, to form printed characters and images. This recording method has spread beyond home-use to office and industrial printing applications since it enables non-contact printing on substrates and easily achieves printing with compact equipment, high-speed printing, low-noise printing, power-saving printing, and color printing.

Ink compositions widely used for the inkjet recording method include water-based inks, which include solutions of various colorants in water or a mixture of water and a water-soluble organic solvent. Such water-based inks, in which water is a main component, have less impact on the environment and are non-flammable and highly safe for workers.

An overcoat ink for forming an overcoat layer on a surface of a recorded matter has been known. For example, Patent Document 1 describes an overcoat ink including a predetermined resin, a neutralizing agent, and a solvent.

Patent document 1 describes that this overcoat ink has an excellent discharge stability and excellent abrasion- and wear-resistance on an image printed on a recording medium. Citation List

### Patent Document

Patent Document 1: Japanese Unexamined Patent Application, Publication No. 2020-070416

### DISCLOSURE OF THE INVENTION

### Problems to be Solved by the Invention

When a recorded matter with an overcoat layer on a surface is used for a packaging material such as a carton, a plurality of these recorded matters are stacked and dispensed one by one under load.

However, if the overcoat layer of the recorded matter has insufficient slipperiness, when the recorded matters are dispensed one by one under load, two or more recorded matters may be dispensed on top of each other or the recorded matter may pop out in an assembling portion, potentially making it difficult to dispense the recorded matters at high speed with a relatively high load applied.

An object of the present invention is to provide an overcoat ink allowing an overcoat layer with high slipperiness to form on a surface of a recorded matter.

### Means for Solving the Problems

As a result of extensive studies to solve the above problems, the present invention has been completed based on findings that an overcoat ink including a resin with a predetermined range of glass transition temperature can solve the above problem. Specifically, the present invention provides the following.

(1) An overcoat ink for use in forming an overcoat layer on a surface of a recorded matter, the ink at least including:
   a resin;
   an organic solvent; and
   water,
   the resin including (a) a resin having a glass transition temperature of 20°C or more and/or (b) a styrene-acrylic resin having a glass transition temperature of 6°C or more.
(2) The overcoat ink according to (1), in which the resin is included in an amount of 5% by mass or more and 30% by mass or less relative to a total amount of the overcoat ink.
(3) The overcoat ink according to (1) or (2), in which the ink is discharged onto the surface of the recorded matter by an inkjet method.
(4) The overcoat ink according to any one of (1) to (3), further including a surfactant, the surfactant including a silicone surfactant and/or an acetylene glycol surfactant.
(5) The overcoat ink according to any one of (1) to (4), further including a wax.
(6) An ink set, including:
   the overcoat ink according to any one of (1) to (5); and
   a water-based ink.
(7) The ink set according to (6), in which each of the inks comprised in the ink set have static surface tensions satisfying a relationship below:
   Static surface tension of overcoat ink Sₒ < Static surface tension of water-based ink S_{c}.
(8) The ink set according to (6) or (7), further including a pretreatment ink.
(9) The ink set according to (8), in which each of the inks comprised in the ink set have static surface tensions satisfying a relationship below:
   Static surface tension of overcoat ink So ≤ Static surface tension of pretreatment ink S_{P} < Static surface tension of water-based ink Sc.
(10) An inkjet recording method using the ink set according to any one of (6) to (9), including
   discharging each of the inks included in the ink set onto a substrate by an inkjet method.
(11) The inkjet recording method according to (10), further including drying each of the inks included in the ink set after the ink is discharged.
(12) A method for producing a recorded matter using the ink set according to any one of (6) to (9), including
   discharging each of the inks included in the ink set onto a substrate by an inkjet method.
(13) A device configured to discharge the ink set according to any one of (6) to (9) by an inkjet method.
(14) The device according to (13), including
   a drying mechanism configured to dry each of the inks included in the ink set after the ink is discharged.
(15) A recorded matter, including:
   a recording medium;
   a water-based ink layer formed of a water-based ink; and
   an overcoat layer formed on the water-based ink layer using the overcoat ink according to any one of (1) to (5).

### Effects of the Invention

An overcoat ink of the present invention can form an overcoat layer with high slipperiness on a surface of a recorded matter.

### BRIEF DESCRIPTION OF THE DRAWINGS

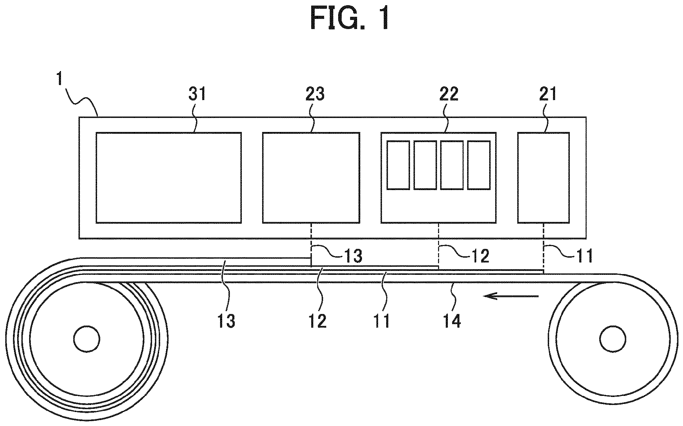

FIG. 1 shows a device configured to discharge an ink set and be suitably used for an ink set according to one embodiment of the present invention.

### PREFERRED MODE FOR CARRYING OUT THE INVENTION

Although specific embodiments of the present invention will be described hereafter in detail, the present invention is not limited to the embodiments below in any way and can be implemented with modifications as appropriate within the scope of the object of the present invention.

### <<Overcoat ink>>

An overcoat ink according to the present embodiment is an overcoat ink for forming an overcoat layer on a surface of a recorded matter. This overcoat ink is a water-based overcoat ink at least including a resin, an organic solvent, and water. Such a water-based overcoat ink has a low impact on the environment and is highly safe for workers due to its non-flammability.

Note that, the phrase "overcoat ink for forming an overcoat layer on a surface of a recorded matter" may be an overcoat ink for directly forming an overcoat layer on a surface of an ink such as a colored ink (e.g., water-based ink) containing a color material (including a colored color material and a black and white color material) while the ink is flowable and present as liquid or an overcoat ink for directly forming an overcoat layer on a surface of an ink layer that is formed of a colored ink (e.g., water-based ink).

Furthermore, the "overcoat ink for forming an overcoat layer on a surface of a recorded matter" is not limited to an overcoat ink for directly forming an overcoat layer on a colored ink or a layer formed of the colored ink and may be an overcoat ink for directly forming an overcoat layer on an ink including a luster pigment (flake metal particles) that confers metallic appearance on the recorded matter (recorded substrate) or a layer formed of the ink or an overcoat ink for directly forming an overcoat ink on a clear ink including no color material or a layer formed of the clear ink. The clear ink including no color material may be an ink for forming a layer having a desired function. Examples of such an ink include a delustering ink composition for delustering a recorded matter (recorded substrate), an ink including an ultraviolet absorbing agent and a light stabilizing agent for forming a weather-resistant layer, and a primer ink.

The resin included in the overcoat ink according to the present embodiment contains (a) a resin having a glass transition temperature of 20°C or more and/or (b) a styrene-acrylic resin having a glass transition temperature of 6°C or more.

The present inventors have revealed that an overcoat layer with high slipperiness can be formed on a surface of a recording matter as long as an overcoat ink includes a resin having a predetermined range of a glass transition temperature. Although the reason for this is not necessarily clear, it is believed that such a high glass transition temperature of the resin constituting the overcoat layer increases hardness of the overcoat layer and decreases static friction of a coated film (overcoat layer) to thereby decrease a friction coefficient between the overcoat layer and a back surface of the recorded matter.

The overcoat ink according to the present embodiment, and a water-based ink and a pretreatment ink included in the below-described ink set may be those for use in, for example, a gravure method, a flexographic method, a spraying method, a screen method, a coater method, etc. Among them, an inkjet method is particularly preferred since it is excellent for forming recorded matters in a small lot.

In particular, for an ink set including the overcoat ink according to the present embodiment, the below-described water-based ink, and optionally further including a receiving solution, when the inks in the ink sets are discharged by the inkjet method, a water-based ink layer and an overcoat layer can be formed on a surface at a time and thus recorded matters including these layers can be produced at high speed, making it possible to produce recorded matters including an overcoat layer with high slipperiness at high productivity.

Next, components included in the overcoat ink according to the present embodiment will be described.

### (Resin)

A resin included in the overcoat ink according to the present embodiment confers abrasion resistance on an overcoat layer.

This resin contains (a) a resin having a glass transition temperature of 20°C or more and/or (b) a styrene-acrylic resin having a glass transition temperature of 6°C or more. This confers slipperiness on the overcoat layer to thereby allow a plurality of recorded matters stacked on top of each other to dispense one by one at high speed with a relatively high load applied.

The (a) resin having a glass transition temperature of 20°C or more is not particularly limited and may be those containing one or more resins or copolymer resins selected from the group consisting of an acrylic resin, a polyurethane resin, a polyester resin, a vinyl chloride resin, a vinyl acetate resin, a polyether resin, a vinyl chloride-vinyl acetate copolymer resin, a polyethylene resin, a silicone (silicon) resin, an acrylamide resin, an epoxy resin, a polycarbonate resin, and a polystyrene resin, or a mixture thereof. Among them, those containing an acrylic resin that includes at least one or more constituent monomers having an acrylic backbone, a polyurethane resin that includes at least one or more constituent monomers having a urethane backbone, or an ester resin that includes at least one or more constituent monomers having an ester backbone are particularly preferably used.

The (b) styrene-acrylic resin having a glass transition temperature of 6°C or more may be a copolymer of styrene and an acrylic acid or a copolymer of styrene and a methacrylic acid.

Furthermore, the resin included in the overcoat ink according to the present embodiment such as the (a) resin having a glass transition temperature of 20°C or more or the (b) styrene-acrylic resin having a glass transition temperature of 6°C or more is preferably a resin at least a portion of which is in a form of resin emulsion. Since the overcoat ink according to the present embodiment includes water, formation of the resin emulsion allows the resin to disperse as resin particles in the overcoat ink including water by the action of electrostatic repulsion or steric repulsion. Therefore, especially when the overcoat ink is discharged onto a surface of a recorded matter by an inkjet method, the resin at least a portion of which is in a form of resin emulsion can increase a discharge stability.

Examples of a commercially available resin emulsion include, but are not limited to, NeoCryl A-2092 (styrene-acrylic resin, Tg: 8°C), NeoCryl A-639 (styrene-acrylic resin, Tg: 62°C), NeoCryl A-662 (styrene-acrylic resin, Tg: 95°C), NeoCryl A-2091 (styrene-acrylic resin, Tg: 98°C), QE-1042 (styrene-acrylic resin, Tg: 53°C), KE-1062 (styrene-acrylic resin, Tg: 96°C), TE-1048 (styrene-acrylic resin, Tg: 123°C), NeoCryl XK-190 (acrylic resin, Tg: 80°C), JONCRYL PDX-7630A (styrene-acrylic resin, Tg: 53°C), JONCRYL PDX-7696 (styrene-acrylic resin, Tg: 86°C), Carboset GA7439 (acrylic resin, Tg: 31°C), MW6899d (acrylic resin, Tg: 48°C), MW6969d (acrylic resin, Tg: 73°C), MW6810 (acrylic resin, Tg: 110°C), JE-1056 (acrylic resin, Tg: 82°C), TAKELAC W-6061 (urethane resin, Tg: 73°C), TAKELAC WS4022 (urethane resin, Tg: 115°C), Sancure 815 (urethane resin, Tg: 161°C), Sancure 777F (urethane resin, Tg: 162°C), ELITEL KZT-8803 (polyester resin, Tg: 61°C), ELITEL KZT-3556S (polyester resin, Tg: 81°C), JONCRYL PDX-7430 (acrylic styrene resin, Tg: 73°C), JONCRYL PDX-7158 (acrylic styrene resin, Tg: 55°C), JONCRYL PDX-7538 (acrylic styrene resin, Tg: 75°C), NeoCryl A-2091 (styrene-acrylic resin, Tg: 98°C), VINYBLAN 700(vinyl chloride-acrylic resin, Tg: 73°C), VINYBLAN 701(vinyl chloride-acrylic resin, Tg: 70°C), and VINYBLAN 745(vinyl chloride-acrylic resin, Tg: 40°C).

An average particle diameter of the resin emulsion is preferably 30 nm or more, more preferably 40 nm or more, and further preferably 50 nm. The average particle diameter of the resin emulsion is preferably 300 nm or less, more preferably 270 nm or less, and more preferably 250 nm from the viewpoints of a dispersing stability in an ink composition and inkjet dischargeability. This further improves a dispersing stability of the resin emulsion in an overcoat ink. Especially when the overcoat ink is discharged onto a surface of a recorded matter by an inkjet method, the resin at least a portion of which is in a form of resin emulsion can further increase a discharge stability. Note that, in the present embodiment, the average particle diameter of the resin emulsion may be measured at a measurement temperature of 25°C using a Fiber-Optics Particle Analyzer (manufactured by Otsuka Electronics Co., Ltd., model: FPAR-1000) .

A mass average molecular weight of the resin emulsion is preferably 10,000 or more, more preferably 50,000 or more, and further preferably 100,000 or more from the viewpoint of water resistance of an overcoat layer. The mass average molecular weight of the resin emulsion is preferably 1,000,000 or less, more preferably 700,000 or less, and further preferably 500,000 or less from the viewpoint of stability of an ink composition. Note that, a molecular weight of the resin in the present embodiment refers to a mass average molecular weight Mw as measured by GPC (gel permeation chromatography), which may be measured using "HLC-8120GPC" manufactured by Tosoh Corporation in terms of polystyrene standard for a calibration curve.

A content of the (a) resin having a glass transition temperature of 20°C or more or the (b) styrene-acrylic resin having a glass transition temperature of 6°C or more is preferably 50% by mass or more, more preferably 70% by mass or more, further preferably 90% by mass or more, and still further preferably 99% by mass or more in a total mass of the resin included in the overcoat ink according to the present embodiment.

A content of the resin included in the overcoat ink according to the present embodiment is not particularly limited. A lower limit of the content of the resin is preferably 5% by mass or more, more preferably 8% by mass or more, and further preferably 10% by mass or more in a total mass of the overcoat ink. This confers further abrasion resistance and slipperiness on the overcoat layer, resulting in an overcoat ink further exerting the effects of the present invention. An upper limit of the content of the resin is preferably 30% by mass or less, more preferably 25% by mass or less, and further preferably 20% by mass or less in a total mass of the overcoat ink. This further improves a dispersing stability of the resin. Especially when the overcoat ink is discharged onto a surface of a recorded matter by an inkjet method, the content of the resin of 30% by mass or less can further increase a discharge stability.

### [Water]

The overcoat ink includes water as a main component. The water is preferably deionized water rather than water containing various ions. A content of the water is not particularly limited, as long as components can be dispersed or dissolved therein. A lower limit of the content of the water is preferably within a range of 30% by mass or more, more preferably within a range of 40% by mass or more, and further preferably within a range of 45% by mass or more, and still further preferably within a range of 50% by mass or more in a total mass of the overcoat ink. An upper limit of the content of the water is preferably within a range of 85% by mass or less, more preferably within a range of 82% by mass or less, and further preferably within a range of 80% by mass or less in a total mass of the overcoat ink.

### [Organic solvent]

The overcoat ink according to the present embodiment includes an organic solvent. The organic solvent can disperse or dissolve, for example, the resin therein.

Since the overcoat ink according to the present embodiment includes water, the organic solvent preferably includes a water-soluble solvent. As used herein, the water-soluble solvent refers to those capable of being dissolved in an amount of 5 parts by mass or more, preferably 20 parts by mass or more, more preferably 50 parts by mass or more, further preferably 70 parts by mass or more, and most preferably 90 parts by mass or more in 100 parts by mass of water at 25°C at 1 atm.

Examples of the organic solvent include alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; amides such as formamide, acetamide, propaneamide, butaneamide, isobutylamide, pentaneamide, N-methylformamide, N-methylacetamide, N-methylpropaneamide, N-methylbutaneamide, N-methylisobutylamide, N-methylpentaneamide, N-ethylformamide, N-ethylacetamide, N-ethylpropaneamide, N-ethylbutaneamide, N-ethylisobutylamide, N-ethylpentaneamide, N-propylformamide, N-propylacetamide, N-propylpropaneamide, N-propylbutaneamide, N-propylisobutylamide, N-propylpentaneamide, N-isopropylformamide, N-isopropylacetamide, N-isopropylpropaneamide, N-isopropylbutaneamide, N-isopropylisobutylamide, N-isopropylpentaneamide, N-butylformamide, N-butylacetamide, N-butylpropaneamide, N-butylbutaneamide, N-butylisobutylamide, N-butylpentaneamide, N,N-dimethylformamide, N,N-dimethylacetamide, N,N-dimethylpropaneamide, N,N-dimethylbutaneamide, N,N-dimethylisobutylamide, N,N-dimethylpentaneamide, N,N-diethylformamide, N,N-diethylacetamide, N,N-diethylpropaneamide, N,N-diethylbutaneamide, N,N-diethylisobutylamide, N,N-diethylpentaneamide, N,N-dipropylformamide, N,N-dipropylacetamide, N,N-dipropylpropaneamide, N,N-dipropylbutaneamide, N,N-dipropylisobutylamide, N,N-dipropylpentaneamide, N,N-diisopropylformamide, N,N-diisopropylacetamide, N,N-diisopropylpropaneamide, N,N-diisopropylbutaneamide, N,N-diisopropylisobutylamide, N,N-diisopropylpentaneamide, N,N-dibutylformamide, N,N-dibutylacetamide, N,N-dibutylpropaneamide, N,N-dibutylbutaneamide, N,N-dibutylisobutylamide, N,N-dibutylpentaneamide, N-ethyl-N-methylformamide, N-ethyl-N-methylacetamide, N-ethyl-N-methylpropaneamide, N-ethyl-N-methylbutaneamide, N-ethyl-N-methylisobutylamide, N-ethyl-N-methylpentaneamide, N-methyl-N-propylformamide, N-methyl-N-propylacetamide, N-methyl-N-propylpropaneamide, N-methyl-N-propylbutaneamide, N-methyl-N-propylisobutylamide, N-methyl-N-propylpentaneamide, N-ethyl-N-propylformamide, N-ethyl-N-propylacetamide, N-ethyl-N-propylpropaneamide, N-ethyl-N-propylbutaneamide, N-ethyl-N-propylisobutylamide, and N-ethyl-N-propylpentaneamide; ketones or keto-alcohols such as acetone and diacetone alcohol; ethers such as tetrahydrofuran and dioxane; oxyethylene- or oxypropylene-copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,3-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol: tetrahydric alcohols such as mesoerythritol and pentaerythritol; monoalkylethers such as ethylene glycol monomethyl (or ethyl, isopropyl, n-butyl, isobutyl, n-hexyl, 2-ethylhexyl) ether, diethylene glycol monomethyl (or ethyl, isopropyl, n-butyl, isobutyl, n-hexyl, 2-ethylhexyl) ether, triethylene glycol monormethyl (or ethyl, propyl, isopropyl, n-butyl, isobutyl, t-butyl, pentyl, n-hexyl, 2-ethylhexyl) ether, propylene glycol monomethyl (or ethyl, propyl, isopropyl, n-butyl, isobutyl, t-butyl, pentyl, n-hexyl, 2-ethylhexyl) ether, dipropylene glycol monomethyl (or ethyl, propyl, isopropyl, n-butyl, isobutyl, t-butyl, pentyl, n-hexyl, 2-ethylhexyl) ether, and tripropylene glycol monomethyl (or ethyl, propyl, isopropyl, n-butyl, isobutyl, t-butyl, pentyl, n-hexyl, 2-ethylhexyl) ether; dialkyl ethers of polyhydric alcohols such as diethylene glycol dimethyl ether, diethylene glycol diethyl ether, diethylene glycol ethyl methyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol dimethyl ether, propylene glycol diethyl ether, propylene glycol ethyl methyl ether, dipropylene glycol dimethyl ether, dipropylene glycol diethyl ether, dipropylene glycol ethyl methyl ether, tripropylene glycol dimethyl ether, tripropylene glycol diethyl ether, and tripropylene glycol ethyl methyl ether; acetates such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl, isobutyl, t-butyl, pentyl, n-hexyl, 2-ethylhexyl) ether acetate, ethylene glycol diacetate, diethylene glycol diacetate, propylene glycol diacetate, and dipropylene glycol diacetate; lactones such as γ-butyrolactone, α-methylene-γ-butyrolactone, ε-caprolactone, γ-valerolactone, γ-hexanolactone, γ-heptanolactone, δ-valerolactone, δ-hexanolactone, δ-heptalactone, δ-octalactone, δ-nonalactone, δ-decalactone, δ-undecalactone, γ,γ-dimethyl-γ-butyrolactone, α-methyl-γ-butyrolactone, γ-crotolactone, α-methylene-γ-butyrolactone, β-methyl-γ-butyrolactone, and 6-methylvalerolactone; carbonic acid esters such as 2,3-butylene carbonate, ethylene carbonate, and propylene carbonate; oxazolidinone solvents such as 3-methyl-2-oxazolidinone, 3-ethyl-2-oxazolidinone, and N-vinylmethyloxazolidinone; alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monohydric alcohols such as 3-methoxy-3-methyl-1-butanol, 3-methoxy-1-propanol, 1-methoxy-2-propanol, and 3-methoxy-n-butanol; ketones or keto alcohols such as acetone and diacetone alcohol; ethers such as tetrahydrofuran and dioxane; oxyethylene- or oxypropylene-copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol: tetrahydric alcohols such as mesoerythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; nitrogen-containing heterocyclic compounds such as N-methyl-2-pyrrolidone, 2-pyrrolidone, and 1,3-dimethyl-2-imidazolidinone; cyclic compounds such as γ-butyrolactone and sulfolane; morpholines such as N-methylmorpholine, N-ethylmorpholine, and N-formylmorpholine; and terpene solvents. Among them, the water-soluble solvent is preferably selected so that the overcoat ink has a desired static surface tension satisfying the below-described relationship regarding static surface tension. For example, alkane diol such as propylene glycol is preferably used.

A content of the organic solvent is not particularly limited, as long as components can be dispersed or dissolved therein. A lower limit of the content of the organic solvent is preferably within a range of 5% by mass or more, more preferably within a range of 10% by mass or more, and further preferably within a range of 12% by mass or more in a total mass of the overcoat ink. An upper limit of the content of the organic solvent is preferably within a range of 50% by mass or less, more preferably within a range of 45% by mass or less, and further preferably within a range of 40% by mass or less in a total mass of the overcoat ink.

### [Wax]

The overcoat ink may contain a wax. The wax is an organic matter or a silicone compound that is solid at room temperature or less but liquefied upon heating. Inclusion of the wax together with a resin having a glass transition temperature falling within a predetermined range can further improve abrasion resistance of the overcoat layer. Moreover, inclusion of the wax can more effectively improve slipperiness of the overcoat layer, resulting in an overcoat ink further exerting the effects of the present invention. Furthermore, inclusion of the wax enables formation of an overcoat layer having more excellent abrasion resistance.

Specific examples of the wax include low molecular weight polyolefin waxes such as polyethylene, polypropylene, polybutene, a polyethylene mixed wax, a polypropylene wax, and a polypropylene mixed wax; silicones (silicons) having a softening point; silicone (silicon)-acrylic waxes; fatty acid amides such as oleic amide, erucic amide, ricinoleic amide, and stearic amide; vegetable waxes such as an ester wax, a carnauba wax, a rice wax, a candelilla wax, a Japan wax, and a jojoba oil; animal waxes such as a bees wax, lanolin, and a spermaceti; mineral waxes such as a montan wax, ozokerite, ceresin, and Fischer-Tropsch wax; petroleum waxes such as a paraffin wax, a microcrystalline wax, petrolatum, and a paraffin mixed wax; and modified products thereof. These waxes are readily commercially available. These waxes also include those called a lubricant or a slip agent. Among them, polyethylene or a silicone surfactant is preferably used as the wax. Examples of such polyethylene or a silicone surfactant include AQUACER 515 and 531 (polyethylene wax emulsion, manufactured by BYK-Chemie), NOPCOTE PEM-17 (polyethylene wax emulsion, manufactured by SAN NOPCO LIMITED), TEGO Glide 410, 440, 450, 482, 485, and 496 (silicone surfactant, manufactured by Evonik Industries AG), and SILFACE SAG 005 and SILFACE SAG 008 (silicone surfactant, manufactured by Nissin Chemical Industry Co., Ltd.), etc. In the overcoat ink according to the present embodiment, the wax may be used alone or two or more thereof may be used in combination.

When the overcoat ink contains the wax, a lower limit of a content of the wax is preferably 0.05% by mass or more, more preferably 0.10% by mass or more, and further preferably 0.15% by mass or more in a total mass of the overcoat ink. This can further effectively improve slipperiness of the overcoat layer, resulting in an overcoat ink further exerting the effects of the present invention. An upper limit of the content of the wax is preferably 5.0% by mass or less, more preferably 3.0% by mass or less, and further preferably 2.0% by mass or less in a total mass of the overcoat ink. This can improve dispersibility of the wax in the overcoat ink. Especially in the case of an overcoat ink to be discharged onto a surface of a recorded matter by an inkjet method, a discharge stability can be improved.

### [Surfactant]

The overcoat ink according to the present embodiment may include a surfactant. Inclusion of the surfactant allows surface tension of the overcoat ink to be controlled within an appropriate range. The surfactant is not particularly limited, but an anionic surfactant, a non-ionic surfactant, a silicone (silicon) surfactant, a fluorosurfactant, an acetylene glycol surfactant, etc. are preferably used from the viewpoint of excellent adjustability of surface tension. Among them, those containing a silicone (silicon) surfactant or an acetylene glycol surfactant are particularly preferred. This allows surface tension of the overcoat ink to be controlled within an appropriate range. For example, static surface tension of a water-based ink and static surface tension of a pretreatment ink can be controlled within a range so as to have a desired relationship as described below. Moreover, when the overcoat ink according to the present embodiment containing water is used in an inkjet method, inclusion of the silicone (silicon) surfactant or the acetylene glycol surfactant enables maintenance of a discharge stability. Although the reason for this is not necessarily clear, it is believed as described below. When an overcoat ink containing water is used in an inkjet method, the water may volatilize during inkjet discharge, which may change a component ratio in the overcoat ink to reduce dispersibility of the resin in the overcoat ink, potentially resulting in a reduced discharge stability. In the overcoat ink according to the present embodiment including a resin having a glass transition temperature falling within a predetermined range, inclusion of the silicone (silicon) surfactant or the acetylene glycol surfactant can prevent reduction in dispersibility of the resin due to water volatilization.

Specific examples of the surfactant include EMAL, LATEMUL, PELEX, NEOPELEX, and DEMOL (all anionic surfactants; manufactured by Kao Corporation), SUNNOL, LIPOLAN, LIPON, and LIPAL (all anionic surfactants; manufactured by Lion Corporation), NOIGEN, EPAN, and SORGEN (all non-ionic surfactants; manufactured by DKS Co. Ltd.), EMULGEN, AMIET, and EMASOL (all non-ionic surfactants; manufactured by Kao Corporation), NAROACTY, EMULMIN, and SANNONIC (all non-ionic surfactants; manufactured by Sanyo Chemical Industries, Ltd.), SURFYNOL 104, 82, 420, 440, 465, 485, TG, 2502, SE-F, 107L, DYNOL 360, DYNOL 604, and DYNOL 607 (all acetylene glycol surfactants; manufactured by Evonik Industries AG), DYNOL 960 (composition of an acetylene glycol surfactant and a silicon surfactant; manufactured by Evonik Industries AG), SURFYNOL AD01 (alkane glycol surfactant; manufactured by Evonik Industries AG), OLFINE E1004, E1010, PD004, and EXP4300 (all acetylene glycol surfactants; manufactured by Nissin Chemical Industry Co., Ltd.), MEGAFACE (fluorosurfactant; manufactured by DIC Corporation), SURFLON (fluorosurfactant; manufactured by AGC SEIMI CHEMICAL CO., LTD.), BYK 302, 306, 307, 331, 333, 345, 346, 347, 348, 349, 3420, 3450, 3451, 3455, and 3456 (all silicone (silicon) surfactants; manufactured by BYK-Chemie), KP-110, 112, 323, 341, and 6004 (all silicone (silicon) surfactants; manufactured by Shin-Etsu Chemical Co., Ltd.), SILFACE SAG 002, SILFACE SAG 005, SILFACE SAG 008, SILFACE SAG 014, SILFACE SAG 503A, SILFACES JG 002, SILFACES JM-002, and SILFACES JM-003 (all silicone (silicon) surfactants; manufactured by Nissin Chemical Industry Co., Ltd.), TEGO FLOW 425, TEGO Glide 100, 110, 130, 410, 432, 440, 450, 482, 490, 492, 494, 496, and ZG400, TEGO Twin 4000, TEGO Twin 4100, TEGO Twin 4200, and TEGO Wet 240, KL245, 250, 260, 265, 270, and 280 (all silicone (silicon) surfactants; manufactured by Evonik Industries AG), and TEGO Wet 500, 505, 510, and 520 (all nonionic surfactants; manufactured by Evonik Industries Ag), etc.

A content of the surfactant is not particularly limited. A lower limit of the content of the surfactant is preferably within a range of 0.5% by mass or more, more preferably within a range of 0.8% by mass or more, and further preferably within a range of 1.0% by mass or more in a total mass of the overcoat ink. An upper limit of the content of the surfactant is preferably within a range of 5.0% by mass or less, more preferably within a range of 4.5% by mass or less, and further preferably within a range of 4.0% by mass or less in a total mass of the overcoat ink. Such a range of the content of the surfactant can improve dispersibility of the resin or the wax in the overcoat ink. Especially in the case of an overcoat ink to be discharged onto a surface of a recorded matter by an inkjet method, a discharge stability can be improved.

### [Antimicrobial agent]

The overcoat ink according to the present embodiment may include an antimicrobial agent. Examples of the antimicrobial agent include an inorganic antimicrobial agent and a water-soluble organic antimicrobial agent. Those exerting an antimicrobial effect on fungi, bacteria, or viruses that are present in the environment, for example, bacteria represented by Staphylococcus aureus and Escherichia coli; fungi such as mold and yeast; and viruses are used as the antimicrobial agent.

Examples of the organic antimicrobial agent include a phenol ether derivative, an imidazole derivative, a sulfone derivative, an N-haloalkylthio compound, an anilide derivative, a pyrrol derivative, a quaternary ammonium salt, pyridine, triazine, benzisothiazoline, and isothiazoline.

Examples thereof include, but are not limited to, 1,2-benzisothiazoline-3-one, N-fluordichloromethylthio-phthalimide, 2,3,5,6-tetrachloroisophthalonitrile, 2,4,5,6-tetrachloroisophthalonitrile <hereinafter also referred to as "TPN"
>, N-trichloromethylthio-4-cyclohexene-1,2-dicarboxyimide, copper 8-quinolinate, bis(tributyltin)oxide, 2-(4-thiazolyl)benzimidazole <hereinafter also referred to as "TBZ"
>, methyl-2-benzimidazole carbamate <hereinafter also referred to as "BCM"
>, 10,10'-oxybisphenoxyarsine <hereinafter also referred to as "OBPA"
>, 2,3,5,6-tetrachloro-4-(methylsulfone)pyridine, bis(2-pyridylthio-1-oxide)zinc <hereinafter also referred to as "ZPT" >, N,N-dimethyl-N'-(fluorodichloromethylthio)-N'-phenylsulfamide
<dichlorfluanid>, poly-(hexamethylenebiguanide)hydrochloride, dithio-2-2'-bis(benzmethylamide), 2-methyl-4,5-trimethylene-4-isothiazoline-3-one, 2-bromo-2-nitro-1,3-propanediol, hexahydro-1,3-tris-(2-hydroxyethyl)-S-triazine, p-chloro-m-xylenol, 1,2-benzisothiazoline-3-one, etc.

Examples of the inorganic antimicrobial agent include mercury, silver, copper, zinc, iron, lead, bismuth, etc. in descending order of a bactericidal activity. For example, a metal such as silver, copper, zinc, and nickel or a metal ion supported on, for example, a silicate carrier, a phosphate carrier, an oxide, glass, potassium titanate, or an amino acid may be used. Examples thereof include, but are not limited to, a zeolite antimicrobial agent, a calcium silicate antimicrobial agent, a zirconium phosphate antimicrobial agent, a calcium phosphate antimicrobial agent, a zinc oxide antimicrobial agent, a soluble glass antimicrobial agent, a silica gel antimicrobial agent, an activated carbon antimicrobial agent, a titanium oxide antimicrobial agent, a titania antimicrobial agent, an organic metal antimicrobial agent, an ion exchanger ceramics antimicrobial agent, a layered phosphate-quaternary ammonium salt antimicrobial agent, and an antimicrobial stainless steel.

### [Infrared absorbing agent]

The overcoat ink according to the present embodiment may include an infrared absorbing agent. The infrared absorbing agent is not particularly limited as long as it has a property of effectively absorbing light at a wavelength in an infrared region, especially in a near-infrared region and may be either inorganic or organic.

Examples of the inorganic infrared absorbing agent include at least one selected from titanium oxide, zinc oxide, indium oxide, tin-doped indium oxide (ITO), tin oxide, antimony-doped tin oxide (ATO), and zinc sulfide.

Examples of the organic infrared absorbing agent include a cyanine compound, a squarylium compound, a thiol-nickel complex salt compound, a naphthalocyanine compound, a phthalocyanine compound, a triallylmethane compound, a naphthoquinone compound, an anthraquinone compound, as well as an amino compound such as a perchloric acid salt of N,N,N',N'-tetrakis(p-di-n-butylaminophenyl)-p-phenylenediaminium, a chlorine salt of phenylenediaminium, a hexafluoroantimonic acid salt of phenylenediaminium, a fluoroboric acid salt of phenylenediaminium, a fluorine salt of phenylenediaminium, a perchloric acid salt of phenylenediaminium; and a phosphoric acid ester copper compound obtained from a reaction between a copper compound and a bisthiourea comopound, a phosphorus compound and a copper compound, and a phosphoric acid ester compound and a copper compound.

### [Ultraviolet absorbing agent]

The overcoat ink according to the present embodiment may include an ultraviolet absorbing agent. This can improve light resistance of the overcoat layer. Examples of the ultraviolet absorbing agent include a known ultraviolet absorbing agent, for example, a benzotriazole compound, a benzophenone compound, a triazine compound, and a benzoxazole compound.

### [Photostabilizing agent]

The overcoat ink according to the present embodiment may include a photostabilizing agent. This can improve light resistance of the overcoat layer. The photostabilizing agent may be a conventionally known hindered amine photostabilizing agent (HALS).

### [Antioxidizing agent]

The overcoat ink according to the present embodiment may include an antioxidizing agent. This can improve light resistance of the overcoat layer. Examples of the antioxidizing agent include a conventionally known antioxidizing agent, for example, phenol such as hindered phenol, chroman, claman, a hydroquinone derivative, a benzotriazole (having no ultraviolet absorbing capacity), and spiroindane. Furthermore, the antioxidizing agent may be an epoxy compound or a polyvalent carboxylic acid compound.

### [Other components]

The overcoat ink may further include a conventionally known additive, if necessary. Examples of the additive include a color material, a viscosity adjusting agent, a pH adjusting agent, a preservative, and a fungicide.

The overcoat ink according to the present embodiment may contain a color material, but preferably contains only a small amount of a color material. This can improve visibility of a recording surface of a recorded matter. Specifically, a content of the color material is preferably 3.0% by mass or less, more preferably 1.0% by mass or less, further preferably 0.5% by mass or less, still further preferably 0.1% by mass or less, and most preferably no color material is included in a total mass of the overcoat ink

Furthermore, when the overcoat layer is a white layer, the overcoat layer may contain a white pigment. Moreover, the overcoat layer has a metallic appearance, the overcoat layer may contain a luster pigment. In these cases, a lower limit of a content of the pigment is preferably within a range of 0.05% by mass or more, more preferably within a range of 0.08% by mass or more, and further preferably within a range of 0.1% by mass or more in a total mass of the overcoat ink. An upper limit of the content of the pigment is preferably within a range of 20% by mass or less, more preferably within a range of 15% by mass or less, and further preferably within a range of 10% by mass or less in a total mass of the overcoat ink. Examples of the white pigment include an inorganic pigment such as barium sulfate, barium carbonate, barium sulfate, silica, clay, talc, titanium oxide, calcium carbonate, synthetic mica, and alumina. Examples of the luster pigment include at least one metal-containing luster pigment of a pearlescent or interference-lustrous pearl pigment such as mica, titanium dioxide-coated mica, fish scale guanine, bismuth acid chloride, silicon dioxide, a metal oxide, and a laminate thereof; single metal such as aluminum, silver, gold, nickel, chromium, tin, zinc, indium, titanium, and copper; a metal compound; an alloy; and a mixture thereof.

A method for preparing the overcoat ink is not particularly limited. For example, the overcoat ink may be prepared by adding a resin, a surfactant, and optionally other components to a water-soluble solvent.

Surface tension of the overcoat ink is not particularly limited, but an upper limit of the surface tension is preferably 30.0 mN/m or less, more preferably 29.0 mN/m or less, and further preferably 28.0 mN/m or less. A lower limit of the surface tension is preferably 19.0 mN/m or more, more preferably 20.0 mN/m or more, and further preferably 21.0 mN/m or more. Note that, static surface tension is a value as measured by a Wilhelmy method (model: DY-300, manufactured by Kyowa Interface Science Co., Ltd) at a measurement temperature of 25°C.

An overcoat ink having a predetermined range of surface tension can be prepared by adjusting a type or a content of an organic solvent or a surfactant to be included in the overcoat ink.

### <<Ink set of first embodiments

The ink set according to the present embodiment is an ink set including the above-described overcoat ink and a water-based ink.

The water-based ink to be included in the ink set according to the present embodiment will be described.

### [Water-based ink]

A water-based ink is an ink that includes water as a main component and optionally a color material and that is applied onto a substrate before application of the above-described overcoat ink. The water-based ink, which is mainly composed of water, has a low impact on the environment and is highly safe for workers due to its non-flammability.

### [Water]

The water-based ink includes water as a main component. The water is preferably deionized water rather than water containing various ions. A content of the water is not particularly limited, as long as components can be dispersed or dissolved therein. A lower limit of the content of the water is preferably within a range of 30% by mass or more, more preferably within a range of 45% by mass or more, and further preferably within a range of 50% by mass or more in a total mass of the water-based ink. An upper limit of the content of the water is preferably within a range of 85% by mass or less, more preferably within a range of 80% by mass or less, and further preferably within a range of 75% by mass or less in a total mass of the water-based ink.

### [Organic solvent]

The water-based ink according to the present embodiment includes an organic solvent. The organic solvent can disperse or dissolve, for example, a color material therein. Since the water-based ink according to the present embodiment includes water, the organic solvent preferably includes a water-soluble solvent.

Examples of the organic solvent include alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; amides such as formamide, acetamide, propaneamide, butaneamide, isobutylamide, pentaneamide, N-methylformamide, N-methylacetamide, N-methylpropaneamide, N-methylbutaneamide, N-methylisobutylamide, N-methylpentaneamide, N-ethylformamide, N-ethylacetamide, N-ethylpropaneamide, N-ethylbutaneamide, N-ethylisobutylamide, N-ethylpentaneamide, N-propylformamide, N-propylacetamide, N-propylpropaneamide, N-propylbutaneamide, N-propylisobutylamide, N-propylpentaneamide, N-isopropylformamide, N-isopropylacetamide, N-isopropylpropaneamide, N-isopropylbutaneamide, N-isopropylisobutylamide, N-isopropylpentaneamide, N-butylformamide, N-butylacetamide, N-butylpropaneamide, N-butylbutaneamide, N-butylisobutylamide, N-butylpentaneamide, N,N-dimethylformamide, N,N-dimethylacetamide, N,N-dimethylpropaneamide, N,N-dimethylbutaneamide, N,N-dimethylisobutylamide, N,N-dimethylpentaneamide, N,N-diethylformamide, N,N-diethylacetamide, N,N-diethylpropaneamide, N,N-diethylbutaneamide, N,N-diethylisobutylamide, N,N-diethylpentaneamide, N,N-dipropylformamide, N,N-dipropylacetamide, N,N-dipropylpropaneamide, N,N-dipropylbutaneamide, N,N-dipropylisobutylamide, N,N-dipropylpentaneamide, N,N-diisopropylformamide, N,N-diisopropylacetamide, N,N-diisopropylpropaneamide, N,N-diisopropylbutaneamide, N,N-diisopropylisobutylamide, N,N-diisopropylpentaneamide, N,N-dibutylformamide, N,N-dibutylacetamide, N,N-dibutylpropaneamide, N,N-dibutylbutaneamide, N,N-dibutylisobutylamide, N,N-dibutylpentaneamide, N-ethyl-N-methylformamide, N-ethyl-N-methylacetamide, N-ethyl-N-methylpropaneamide, N-ethyl-N-methylbutaneamide, N-ethyl-N-methylisobutylamide, N-ethyl-N-methylpentaneamide, N-methyl-N-propylformamide, N-methyl-N-propylacetamide, N-methyl-N-propylpropaneamide, N-methyl-N-propylbutaneamide, N-methyl-N-propylisobutylamide, N-methyl-N-propylpentaneamide, N-ethyl-N-propylformamide, N-ethyl-N-propylacetamide, N-ethyl-N-propylpropaneamide, N-ethyl-N-propylbutaneamide, N-ethyl-N-propylisobutylamide, and N-ethyl-N-propylpentaneamide; ketones or keto-alcohols such as acetone and diacetone alcohol; ethers such as tetrahydrofuran and dioxane; oxyethylene- or oxypropylene-copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,3-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol: tetrahydric alcohols such as mesoerythritol and pentaerythritol; monoalkylethers such as ethylene glycol monomethyl (or ethyl, isopropyl, n-butyl, isobutyl, n-hexyl, 2-ethylhexyl) ether, diethylene glycol monomethyl (or ethyl, isopropyl, n-butyl, isobutyl, n-hexyl, 2-ethylhexyl) ether, triethylene glycol monormethyl (or ethyl, propyl, isopropyl, n-butyl, isobutyl, t-butyl, pentyl, n-hexyl, 2-ethylhexyl) ether, propylene glycol monomethyl (or ethyl, propyl, isopropyl, n-butyl, isobutyl, t-butyl, pentyl, n-hexyl, 2-ethylhexyl) ether, dipropylene glycol monomethyl (or ethyl, propyl, isopropyl, n-butyl, isobutyl, t-butyl, pentyl, n-hexyl, 2-ethylhexyl) ether, and tripropylene glycol monomethyl (or ethyl, propyl, isopropyl, n-butyl, isobutyl, t-butyl, pentyl, n-hexyl, 2-ethylhexyl) ether; dialkyl ethers of polyhydric alcohols such as diethylene glycol dimethyl ether, diethylene glycol diethyl ether, diethylene glycol ethyl methyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol dimethyl ether, propylene glycol diethyl ether, propylene glycol ethyl methyl ether, dipropylene glycol dimethyl ether, dipropylene glycol diethyl ether, dipropylene glycol ethyl methyl ether, tripropylene glycol dimethyl ether, tripropylene glycol diethyl ether, and tripropylene glycol ethyl methyl ether; acetates such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl, isobutyl, t-butyl, pentyl, n-hexyl, 2-ethylhexyl) ether acetate, ethylene glycol diacetate, diethylene glycol diacetate, propylene glycol diacetate, and dipropylene glycol diacetate; lactones such as γ-butyrolactone, α-methylene-γ-butyrolactone, ε-caprolactone, γ-valerolactone, γ-hexanolactone, γ-heptanolactone, δ-valerolactone, δ-hexanolactone, δ-heptalactone, δ-octalactone, δ-nonalactone, δ-decalactone, δ-undecalactone, γ,γ-dimethyl-γ-butyrolactone, α-methyl-γ-butyrolactone, γ-crotolactone, α-methylene-γ-butyrolactone, β-methyl-γ-butyrolactone, and 6-methylvalerolactone; carbonic acid esters such as 2,3-butylene carbonate, ethylene carbonate, and propylene carbonate; oxazolidinone solvents such as 3-methyl-2-oxazolidinone, 3-ethyl-2-oxazolidinone, and N-vinylmethyloxazolidinone; alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monohydric alcohols such as 3-methoxy-3-methyl-1-butanol, 3-methoxy-1-propanol, 1-methoxy-2-propanol, and 3-methoxy-n-butanol; ketones or keto alcohols such as acetone and diacetone alcohol; ethers such as tetrahydrofuran and dioxane; oxyethylene- or oxypropylene-copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol: tetrahydric alcohols such as mesoerythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; nitrogen-containing heterocyclic compounds such as N-methyl-2-pyrrolidone, 2-pyrrolidone, and 1,3-dimethyl-2-imidazolidinone; cyclic compounds such as γ-butyrolactone and sulfolane; morpholines such as N-methylmorpholine, N-ethylmorpholine, and N-formylmorpholine; and terpene solvents.

Among them, an organic solvent having a water-octanol partition coefficient of -0.3 or less is preferably used. The water-octanol partition coefficient means a common logarithm of a concentration ratio between two solvent phases, water and 1-octanol, when a chemical substance is added to the two phases to reach an equilibrium state.

When a water-based ink has high permeability into a substrate (recording medium), less amount of the water-based ink remains on a surface of the substrate, which reduces wet-spreading (spreading in a direction of the surface of the substrate) of the water-based ink on the substrate to potentially cause poor filling. The study of the present invention revealed that inclusion of the organic solvent having a water-octanol partition coefficient of -0.3 or less together with water can prevent the water-based ink from permeating into the substrate (recording medium). Prevention of the permeation of the water-based ink into the substrate (recording medium) can effectively suppress poor filling due to reduced wet-spreadability, resulting in an image with high reproducibility.

This is because as described below. Since the organic solvent having a water-octanol partition coefficient of -0.3 or less has high hydrophilicity, when it is included along with water, the water-based ink can have a lower contact angle on the substrate (i.e., higher wettability), making the water-based ink easier to wet and spread on the substrate rather than permeating into the substrate.

Moreover, application of the overcoat ink that includes the resin having the above-described predetermined range of a glass transition temperature over the water-based ink that includes the organic solvent having a water-octanol partition coefficient of -0.3 or less can suppress poor filling and form an overcoat layer with high slipperiness on an image with high reproducibility. This allows, for example, a plurality of recorded matters stacked on top of each other to dispense one by one at high speed with a relatively high load applied while protecting the image with high reproducibility with the overcoat layer. Moreover, the water-based ink including the organic solvent having a water-octanol partition coefficient of -0.3 or less can confer abrasion resistance and glossiness on the resulting recording layer.

Such an organic solvent having a water-octanol partition coefficient of -0.3 or less is preferably alkane diols having a water-octanol partition coefficient of -0.3 or less. Examples thereof include 1,2-butanediol, propylene glycol, 1,3-propanediol, 1,4-butanediol, 1,5-pentanediol, 1,6-hexanediol, 3-methyl-1,3-butanediol, etc.

A content of the organic solvent is not particularly limited as long as components can be dispersed or dissolved therein. A lower limit of the content of the organic solvent is preferably within a range of 5% by mass or more, more preferably within a range of 10% by mass or more, and further preferably within a range of 12% by mass or more in a total mass of the water-based ink. An upper limit of the content of the organic solvent is preferably within a range of 50% by mass or less, more preferably within a range of 45% by mass or less, and further preferably within a range of 40% by mass or less in a total mass of the water-based ink.

Furthermore, a content of the organic solvent having a water-octanol partition coefficient of -0.3 or less (e.g., alkane diol having a water-octanol partition coefficient of -0.3 or less) is not particularly limited. A lower limit of the content is preferably 1% by mass or more, more preferably 3% by mass or more, and further preferably 5% by mass or more in a total mass of the water-based ink. Furthermore, a upper limit of the content of the organic solvent having a water-octanol partition coefficient of -0.3 or less is preferably 50% by mass or less, more preferably 30% by mass or less, and further preferably 23% by mass or less in a total mass of the water-based ink.

### [Resin]

The water-based ink according to the present embodiment may include a resin. Inclusion of the resin can prevent a pigment from permeating into the substrate (recording medium) to thereby facilitate fixation of a color material. The resin is preferably a resin emulsion from the viewpoints of an excellent fixing property and excellent water resistance of the water-based ink layer. Furthermore, formation of the resin emulsion allows the resin to disperse as resin particles in the water-based ink by the action of electrostatic repulsion or steric repulsion, making it possible to improve a dispersing stability.

Specifically, those containing one or more resins or copolymer resins selected from the group consisting of an acrylic resin, a styrene-acrylic resin, a polystyrene resin, a polyester resin, a vinyl chloride resin, a vinyl acetate resin, a vinyl chloride-vinyl acetate copolymer resin, a polyethylene resin, a urethane resin, a silicone (silicon) resin, an acrylamide resin, an epoxy resin, a polycarbonate resin, and a polystyrene resin, or a mixture thereof may be used. These are preferred since water resistance and also solvent resistance can be improved. Among them, those containing an acrylic resin that includes at least one or more constituent monomers having an acrylic backbone are preferred from the viewpoints of excellent discharge stability, water resistance, and solvent resistance.

Examples of commercially available resin emulsion include, but are not limited to, ACRIT WEM-031U, WEM-200U, WEM-321, WEM-3000, WEM-202U, and WEM-3008 (manufactured by Taisei Fine Chemical Co., Ltd., acryl-urethane resin emulsion), ACRIT UW-550CS, UW-223SX, AKW107, and RKW-500 (manufactured by Taisei Fine Chemical Co., Ltd., acrylic resin emulsion), LUBRIJET N240 (manufactured by The Lubrizol Corporation, acrylic resin emulsion), SUPERFLEX 150, 210, 470, 500M, 620, 650, E2000, E4800, and R5002 (manufactured by DKS Co. Ltd., urethane resin emulsion), VINYBLAN 701FE35, 701FE50, 701FE65, 700, 701, 711, 737, and 747 (manufactured by Nissin Chemical Industry Co., Ltd., vinyl chloride-acrylic resin emulsion), VINYBLAN 2706 and 2685 (manufactured by Nissin Chemical Industry Co., Ltd., acrylic resin emulsion), MOWINYL 743N, 6520, 6600, 6820, 7470, and 7720, (manufactured by Japan Coating Resin Corporation, acrylic resin emulsion), PRIMALAC-261P and AC-818 (manufactured by The Dow Chemical Company, acrylic resin emulsion), NeoCryl A2091, A2092, A639, A655, and A662 (manufactured by DSM Coating Resin, styrene-acrylic resin emulsion), QE-1042 and KE-1062 (manufactured by SEIKO PMC CORPORATION, styrene-acrylic resin emulsion), JE-1056 (manufactured by SEIKO PMC CORPORATION, acrylic resin emulsion), JONCRYL7199 and PDX-7630A (manufactured by BASF Japan, styrene-acrylic resin emulsion), CHALINE R170BX (manufactured by Nissin Chemical Industry Co., Ltd., silicone-acrylic resin emulsion), TAKELAC W-6010 (manufactured by Mitsui Chemicals, Inc., urethane resin emulsion), ELITEL KA-5071S (manufactured by UNITIKA LTD., polyester resin emulsion), POLYSOL AP-1350 (manufactured by Showadenkosya. co. ltd., acrylic resin emulsion).

A content of the resin (resin emulsion) included in the water-based ink is not particularly limited. A lower limit of the content of the resin is preferably 0.05% by mass or more, more preferably 0.1% by mass or more, further preferably 0.5% by mass or more, and more preferably 1% by mass or more in a total mass of the water-based ink. This can effectively prevent the water-based ink from permeating into the substrate (recording medium), making it possible to effectively suppress poor filling due to a partial decrease of print density, resulting in an image with high reproducibility. An upper limit of the content of the resin is preferably 15% by mass or less, inter alia, more preferably, 12% by mass or less, and further preferably 10% by mass or less in a total mass of the water-based ink. This further improves a dispersing stability of the resin. Especially when the water-based ink is discharged onto a surface of a substrate by an inkjet method, the content of the resin of 15% by mass or less can further increase a discharge stability.

Among them, in the ink set according to the present embodiment (ink set of a first embodiment) or the below-described ink set (ink set of a second embodiment), a content of the resin (resin emulsion) included in the water-based ink is preferably lower than that of the resin (resin emulsion) included in the overcoat ink. Especially when the overcoat ink directly is applied on a surface of the water-based ink while the water-based ink is flowable and present as liquid, these inks are mixed at an interface between the water-based ink and the overcoat ink. When the content of the resin included in the water-based ink is higher than that of the resin included in the overcoat ink, a portion of the resin included in the water-based ink becomes included in the overcoat ink. As a result, slipperiness of the overcoat layer may be relatively decreased under the influence of the resin included in the water-based ink. When the content of the resin (resin emulsion) included in the water-based ink is lower than that of the resin (resin emulsion) included in the overcoat ink, the slipperiness of the overcoat layer can be prevented from decreasing under the influence of the resin included in the water-based ink, resulting in an ink set further exerting the effects of the present invention.

An average particle diameter of the resin emulsion is preferably 30 nm or more, more preferably 40 nm or more, and further preferably 50 nm or more. The average particle diameter of the resin emulsion is preferably 300 nm or less, more preferably 270 nm or less, and further preferably 250 nm or less. This further improves a dispersing stability of the resin emulsion in the water-based ink. Especially when the water-based ink is discharged onto a surface of a recorded matter by an inkjet method, the resin at least a portion of which is in a form of a resin emulsion can further increase a discharge stability. Note that, in the present embodiment, the average particle diameter of the resin emulsion may be measured at a measurement temperature of 25°C using a Fiber-Optics Particle Analyzer (model: FPAR-1000. manufactured by Otsuka Electronics Co., Ltd.).

A mass average molecular weight of the resin emulsion is preferably 10,000 or more, more preferably 50,000 or more, and further preferably 100,000 or more from the viewpoint of water resistance of the water-based ink layer. The mass average molecular weight of the resin emulsion is preferably 1,000,000 or less, more preferably 700,000 or less, and more preferably 500,000 or less from the viewpoint of a stability of the ink composition. Note that, in the present embodiment, a molecular weight of the resin refers to a mass average molecular weight Mw, a value as measured by GPC (gel permeation chromatography), which may be measured using "HLC-8120GPC" manufactured by Tosoh Corporation in terms of polystyrene standard for a calibration curve.

### [Color material]

The water-based ink according to the present embodiment may include a color material. Inclusion of the color material enables printing on a surface of a substrate and thus formation of a recording layer forming a desired image pattern. The color material may be a dye or a pigment, but is preferably a pigment.

Examples of the pigment include a pigment conventionally used for an inkjet ink, for example, an inorganic pigment such as barium sulfate, iron oxide, zinc oxide, barium carbonate, barium sulfate, silica, clay, talc, titanium oxide, calcium carbonate, synthetic mica, and alumina, or an organic pigment. These may be used alone or two or more thereof may be used in combination. Specific examples of the organic pigment include an insoluble azo pigment, a soluble azo pigment, a dye derivative, a phthalocyanine organic pigment, a quinacridone organic pigment, a perylene organic pigment, a perinone organic pigment, an azomethine organic pigment, an anthraquinone organic pigment (anthrone organic pigment), a xanthene organic pigment, a diketopyrrolopyrrole organic pigment, a dioxazine organic pigment, a nickel azo pigment, an isoindolinone organic pigment, a pyranthron organic pigment, a thioindigo organic pigment, a condensed azo organic pigment, a benzimidazolone organic pigment, a quinophthalone organic pigment, an isoindoline organic pigment; and an organic solid solution pigment such as a quinacridone solid solution pigment and a perylene solid solution pigment. Examples of other pigments include a lake pigment and carbon black.

Exemplary organic pigments have color index (C.I.) numbers below: C.I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214; C.I. Pigment Red 5, 7, 9, 12, 48, 48:2, 48:3, 49, 52, 53, 57, 57:1, 97, 112, 122, 123, 146, 149, 150, 168, 176, 177, 180, 184, 185, 192, 202, 206, 208, 209, 213, 215, 216, 217, 220, 223, 224, 226, 227, 228, 238, 240, 254, 269, and 291; C.I. Pigment Orange 16, 36, 43, 51, 55, 59, 61, 64, 71, and 73; C.I. Pigment Violet 19, 23, 29, 30, 37, 40, and 50; C.I. Pigment Blue 15, 15:1, 15:3, 15:4, 15:6, 16, 22, 60, and 64; C.I. Pigment Green 7, 36, 58, 59, 62, and 63; C.I. Pigment Brown 23, 25, and 26; and C.I. Pigment Black 7.

Specific examples of a dye that can be used in the water-based ink according to the present embodiment include an azo dye, a benzoquinone dye, a naphthoquinone dye, an anthraquinone dye, a cyanin dye, a squarylium dye, a croconium dye, a merocyanine dye, a stilbene dye, a diarylmethane dye, a triarylmethane dye, a fluoran dye, a spiropyran dye, a phthalocyanine dye, an indigo dye such as an indigoid, a fulgide dye, a nickel complex dye, and an azulene dye.

Furthermore, specific examples of the inorganic pigment may include titanium oxide, barium sulfate, calcium carbonate, zinc flower, lead sulfate, yellow lead, zinc yellow, colcothar (red iron oxide (III)), cadmium red, ultramarine blue, prussian blue, chromic oxide green, cobalt green, amber, titanium black, synthetic iron black, and an inorganic solid solution pigment.

An average dispersed particle diameter of the pigment is not particularly limited as long as a desired color can be developed. Depending on a type of the pigment, a lower limit of the average dispersed particle diameter of the pigment is preferably within a range of 10 nm or more, more preferably within a range of 20 nm or more, and further preferably within a range of 30 nm or more from the viewpoints of a good dispersing stability of the pigment and sufficient coloring power. An upper limit of the average dispersed particle diameter of the pigment is preferably within a range of 300 nm or less, more preferably within a range of 250 nm or less, and further preferably within a range of 200 nm or less. When the average dispersed particle diameter is 300 nm or less, a nozzle of an inkjet head is less likely to be clogged, resulting in a homogeneous image with high reproducibility. When the average dispersed particle diameter is 10 nm or more, the resulting printed matter has good light resistance. Note that, in the present embodiment, the average dispersed particle diameter of the pigment is an average particle diameter (D50) as measured by a Fiber-Optics Particle Analyzer (model: FPAR-1000, manufactured by Otsuka Electronics Co., Ltd.) at 25°C.

A content of the pigment is not particularly limited as long as a desired image can be formed, and is adjusted as appropriate. Specifically, depending on a type of the pigment, a lower limit of the content of the pigment is preferably within a range of 0.05% by mass or more, more preferably within a range of 0.08% by mass or more, and further preferably within a range of 0.1% by mass or more in a total mass of the water-based ink An upper limit of the content of the pigment is preferably within a range of 20% by mass or less, more preferably within a range of 15% by mass or less, and further preferably within a range of 10% by mass or less in a total mass of the water-based ink. When the content of the pigment is within a range of 0.05% by mass or more or 20% by mass or less, the pigment has a well-balanced dispersing stability and coloring power.

### [Pigment dispersing agent]

The water-based ink according to the present embodiment may include a pigment dispersing agent. The pigment dispersing agent means a resin or a surfactant that deposits on a portion of a surface of the pigment to improve dispersibility of the pigment in the ink.

The pigment dispersing agent that can be used in the water-based ink according to the present embodiment is not particularly limited. For example, a cationic surfactant, an anionic surfactant, a nonionic surfactant, an ampholytic surfactant, a silicone (silicon) surfactant, or a fluorosurfactant may be used. Among the surfactants, a polymer surfactant (polymer dispersing agent) as exemplified below is preferred.

A water-soluble polymer dispersing agent may be preferably used as the pigment dispersing agent that can be used in the water-based ink according to the present embodiment. Examples of the water-soluble polymer dispersing agent include a dispersing agent that has a polyester-, polyacrylic-, polyurethane-, polyamine-, polycaprolactone-main chain and a polar group such as an amino group, a carboxy group, a sulfo group, and a hydroxy group in its side chain. For example, (co)polymers of unsaturated carboxylic acid esters such as polyacrylic esters; copolymers of aromatic vinyl compounds such as styrene or α-methylstyrene and unsaturated carboxylic acid esters such as acrylic esters; (partial)amine salts, (partial)ammonium salts, or (partial)alkylamine salts of (co)polymers of unsaturated carboxylic acids such as polyacrylic acids; (co)polymers of hydroxy group-containing unsaturated carboxylic acid esters such as hydroxy group-containing polyacrylic esters, or modified products thereof; polyurethanes; unsaturated polyamides; polysiloxanes; long polyaminoamide phosphates; polyethyleneimine derivatives (amides obtained from reactions of (poly(lower alkyleneimines) with free carboxyl group-containing polyesters, or bases thereof); and polyallylamine derivatives (reaction produces obtained from reactions of polyallylamines with one or more compounds selected from three compounds, i.e., free carboxyl group-containing polyesters, polyamides, or co-condensations of esters and amides (polyesteramides)), etc. may be used. Among them, a water-soluble polymer dispersing agent containing a (meth)acrylic resin is preferred from the viewpoints of a dispersing stability of the ink and image definition of a printed matter.

Specific examples of the water-soluble polymer dispersing agent include SMA1440, SMA2625, SMA17352, SMA3840, SMA1000, SMA2000, and SMA3000 (all manufactured by Cray Valley); JONCRYL 67, JONCRYL 678, JONCRYL 586, JONCRYL 611, JONCRYL 680, JONCRYL 682, JONCRYL 690, JONCRYL 819, JONCRYL-JDX5050, EFKA 4550, EFKA 4560, EFKA 4585, EFKA 5220, EFKA 6230, and Dispex Ultra PX4575 (all manufactured by BASF Japan); SOLSPERSE 20000, SOLSPERSE 27000, SOLSPERSE 40000, SOLSPERSE 41000, SOLSPERSE 41090, SOLSPERSE 43000, SOLSPERSE 44000, SOLSPERSE 45000, SOLSPERSE 46000, SOLSPERSE 47000, SOLSPERSE 53095, SOLSPERSE 54000, SOLSPERSE 64000, SOLSPERSE 65000, SOLSPERSE 66000, SOLSPERSE J400, SOLSPERSE W100, SOLSPERSE W200, SOLSPERSE W320, and SOLSPERSE WV400 (all manufactured by The Lubrizol Corporation); ANTI-TERRA-250, BYKJET-9150, BYKJET-9151, BYKJET-9152, BYKJET-9170, DISPERBYK-102, DISPERBYK-168, DISPERBYK-180, DISPERBYK-184, DISPERBYK-185, DISPERBYK-187, DISPERBYK-190, DISPERBYK-191, DISPERBYK-193, DISPERBYK-194N, DISPERBYK-198, DISPERBYK-199, DISPERBYK-2010, DISPERBYK-2012, DISPERBYK-2013, DISPERBYK-2014, DISPERBYK-2015, DISPERBYK-2018, DISPERBYK-2019, DISPERBYK-2055, DISPERBYK-2060, DISPERBYK-2061, DISPERBYK-2081, and DISPERBYK-2096 (all manufactured by BYK-Chemie); TEGO DISPERS 650, TEGO DISPERS 651, TEGO DISPERS 652, TEGO DISPERS 655, TEGO DISPERS 660C, TEGO DISPERS 670, TEGO DISPERS 715W, TEGO DISPERS 740W, TEGO DISPERS 741W, TEGO DISPERS 750W, TEGO DISPERS 752W, TEGO DISPERS 755W, TEGO DISPERS 757W, TEGO DISPERS 760W, TEGO DISPERS 761W, TEGO DISPERS 765W, ZETASPERSE 170, ZETASPERSE 179, ZETASPERSE 182, ZETASPERSE 3100, ZETASPERSE 3400, ZETASPERSE 3700, and ZETASPERSE 3800 (all manufactured by Evonik Industries AG); and SN-DISPERSANT 2010, SN-DISPERSANT 2060, SN-DISPERSANT 4215, SN-DISPERSANT 5027, SN-DISPERSANT 5029, SN-DISPERSANT 5034, SN-DISPERSANT 5468, NOPCALL 5200, NOPCOSANT K, NOPCOSANT R, NOPCOSPERSE 44-C, NOPCOSPERSE 6100, and NOPCOSPERSE 6150 (all manufactured by SAN NOPCO LIMITED), etc. These pigment dispersing agents can be suitably used in the water-based ink according to the present embodiment.

The pigment that can be used in the water-based ink according to the present embodiment may be a pigment dispersion in which the pigment is dispersed in a water-soluble solvent with the pigment dispersing agent or a pigment dispersion of a self-dispersing pigment of which surface is directly modified with a hydrophilic group. In the present embodiment, the pigment that can be used for an inkjet recording ink may be a combination of a plurality of the organic pigment and the inorganic pigment as described above or a combination of the pigment dispersion in which the pigment is dispersed in a water-soluble solvent with the pigment dispersing agent or the self-dispersing pigment as described above. Among them, in the ink set according to the present embodiment, a pigment that is free of the self-dispersing pigment is preferably used. This can effectively suppress cissing of the water-based ink. Although the reason for this is not necessarily clear, it is presumed because the water-based ink moderately wets and spreads to fill a substrate well, which can effectively prevent cissing of the water-based ink.

### [Surfactant]

The water-based ink according to the present embodiment may include a surfactant. The surfactant is not particularly limited, but an anionic surfactant, a non-ionic surfactant, a silicone (silicon) surfactant, a fluorosurfactant, an acetylene glycol surfactant, etc. are preferably used from the viewpoint of excellent adjustability of surface tension.

Specific examples thereof include EMAL, LATEMUL, PELEX, NEOPELEX, and DEMOL (all anionic surfactants; manufactured by Kao Corporation), SUNNOL, LIPOLAN, LIPON, and LIPAL (all anionic surfactants; manufactured by Lion Corporation), NOIGEN, EPAN, and SORGEN (all non-ionic surfactants; manufactured by DKS Co. Ltd.), EMULGEN, AMIET, and EMASOL (all non-ionic surfactants; manufactured by Kao Corporation), NAROACTY, EMULMIN, and SANNONIC (all non-ionic surfactants; manufactured by Sanyo Chemical Industries, Ltd.), SURFYNOL 104, 82, 420, 440, 465, 485, TG, 2502, SE-F, and 107L, DYNOL 360, DYNOL 604, and DYNOL 607 (all acetylene glycol surfactants; manufactured by Evonik Industries AG), DYNOL 960 (composition of acetylene glycol surfactant and silicon surfactant; Evonik Industries AG), SURFYNOL AD01 (alkane glycol surfactant; manufactured by Evonik Industries AG), OLFINE E1004, E1010, PD004, and EXP4300 (all acetylene glycol surfactants; manufactured by Nissin Chemical Industry Co., Ltd.), MEGAFACE (fluorosurfactant; manufactured by DIC Corporation), SURFLON (fluorosurfactant; manufactured by AGC SEIMI CHEMICAL CO., LTD.), BYK302, 306, 307, 331, 333, 345, 346, 347, 348, 349, 3420, 3450, 3451, 3455, and 3456 (all silicone (silicon) surfactants; manufactured by BYK-Chemie), KP-110, 112, 323, 341, and 6004 (all silicone (silicon) surfactants; manufactured by Shin-Etsu Chemical Co., Ltd.), SILFACE SAG 002, SILFACE SAG 005, SILFACE SAG 008, SILFACE SAG 014, SILFACE SAG 503A, SILFACE SJM-002, and SILFACES JM-003 (all silicone (silicon) surfactants; manufactured by Nissin Chemical Industry Co., Ltd.), TEGO FLOW 425, TEGO Glide 100, 110, 130, 410, 432, 440, 450, 482, 490, 492, 494, 496, and ZG400, TEGO Twin 4000, TEGO Twin 4100, TEGO Twin 4200, TEGO Wet 240, TEGO Wet 250, TEGO Wet 240, KL245, 250, 260, 265, 270, and 280 (all silicone (silicon) surfactants; manufactured by Evonik Industries AG), and TEGO Wet 500, 505, 510, and 520 (all nonionic surfactants; manufactured by Evonik Industries Ag), etc.

A content of the surfactant is not particularly limited as long as each of the inks has a predetermined range of static surface tension. A lower limit of the content of the surfactant is preferably within a range of 0.30% by mass or more, more preferably within a range of 0.40% by mass or more, and further preferably within a range of 0.50% by mass or more in a total mass of the water-based ink. An upper limit of the content of the surfactant is preferably within a range of 5.0% by mass or less, more preferably within a range of 4.0% by mass or less, and further preferably within a range of 3.0% by mass or less in a total mass of the water-based ink.

### [Other components]

The water-based ink may further include a conventionally known additive, if necessary. Examples of the additive include a wax, a viscosity adjusting agent, a pH adjusting agent, an antioxidizing agent, a preservative, and a fungicide.

A method for preparing the water-based ink is not particularly limited. For example, a method in which a self-dispersing pigment, a resin, a surfactant, and optionally other components are added to a water-soluble solvent, a method in which a pigment and a dispersing agent are added to and dispersed in a water-soluble solvent and then a resin, a surfactant, and optionally other components are added thereto, and a method in which a pigment, a resin, a surfactant, and optionally other components are added to a water-soluble solvent and then the pigment is dispersed therein, may be exemplified.

Surface tension of the water-based ink is not particularly limited. An upper limit of the surface tension is preferably 35.0 mN/m or less, more preferably 32.0 mN/m or less, and further preferably 30.0 mN/m or less. A lower limit of the surface tension is preferably 21.5 mN/m or more, more preferably 22.5 mN/m or more, and further preferably 23.5 mN/m or more,

A water-based ink having a predetermined range of surface tension can be prepared by adjusting a type or a content of a water-soluble solvent or a surfactant to be included in the water-based ink. The surface tension (static surface tension) of the water-based ink is preferably adjusted so that static surface tension Sₒ of the overcoat ink and static surface tension S_{c} of the water-based ink included in an ink set satisfy the below-described relationship:

Static surface tension of overcoat ink Sₒ < Static surface tension of water-based ink S_{c}.

Such a relationship of the static surface tension can effectively prevent the water-based ink from smearing. The reason for this is not clear, but it is presumed because the overcoat ink flows in a spreading direction (outward direction) and the water-based ink flows in a shrinking direction (inward direction) at an interface between the overcoat ink and the water-based ink, which controls wet-spreading of the water-based ink to thereby effectively prevent the water-based ink from smearing.

Note that, the overcoat ink may be impacted onto a water-based ink layer formed of a solidified or dried water-based ink, but is preferably discharged and impacted onto a substrate while the water-based ink is present as liquid (is flowable) after the water-based ink is impacted onto the substrate. When the overcoat ink is impacted onto the water-based ink on the substrate while the water-based ink is highly flowable, the water-based ink can prevent the overcoat ink from spreading. Additionally, when the overcoat ink is impacted onto the water-based ink on the substrate while the water-based ink is highly flowable, a higher speed printing and thus a higher production rate of a recorded matter are enabled.

A lower limit of a difference between static surface tension of the overcoat ink Sₒ and static surface tension of the water-based ink S_{c} (S_{c} - So) is preferably 0.6 mN/m or more, more preferably 0.8 mN/m or more, and further preferably 0.9 mN/m or more. The difference between Sₒ and S_{c} (S_{c} - Sₒ) of 0.6 mN/m or more can more effectively prevent the water-based ink from smearing. Although the reason for this is not necessarily clear, it is presumed because when the difference between Sₒ and S_{c} (S_{c} - So) is 0.6 mN/m or more, a mixture (mixture of a pretreatment ink and the water-based ink) flows in a shrinking direction (inward direction) relative to the overcoat ink to prevent the water-based ink from smearing.

Furthermore, an upper limit of the difference between Sₒ and S_{c} (S_{c} - So) is not particularly limited, but is preferably 7.5 mN/m or less, more preferably 6.0 mN/m or less, and further preferably 4.5 mN/m or less. In particular, the difference between Sₒ and S_{c} (S_{c} - So) of 7.5 mN/m or less can more effectively prevent the water-based ink from smearing. Although the reason for this is not necessarily clear, it is presumed because as described below. When the difference between Sₒ and S_{c} (S_{c} - So) is too large, the overcoat ink tends to wet and spread too widely, so that the water-based ink physically follows the overcoat ink to wet and spread, resulting in relative deterioration of a smear of the water-based ink. The difference between Sₒ and S_{c} (S_{c} - So) of 7.5 mN/m or less can more effectively prevent the water-based ink from smearing due to wide wet-spreading of the overcoat ink.

### <<Ink set of second embodiment>>

The ink set according to the present embodiment is an ink set including the above-described overcoat ink, the above-described water-based ink, and a pretreatment ink.

The pretreatment ink to be included in the ink set according to the present embodiment will be described.

### [Pretreatment ink]

A pretreatment ink is a water-based ink that includes water as a main component and a cationic compound as a reaction liquid and that is applied on a substrate before the water-based ink is discharged. The pretreatment ink is not particularly limited as long as it includes a cationic compound as a reaction liquid.

### (Reaction liquid)

A reaction liquid includes a cationic compound and thus aggregates a color material included in the water-based ink, which prevents the water-based ink from smearing due to spreading of the water-based ink around an impact position. Examples of the cationic compound include a cationic resin having a cationic group and a metal salt composed of a metal ion (cationic compound) and an anion. Among them, the cationic resin having a cationic group is preferably used. This can more effectively prevent the water-based ink from smearing. Although the reason for this is not necessarily clear, it is presumed because as described below. The cationic resin has many reaction sites in a molecular chain and molecular chains constituting the resin are entangled with each other. As a result, aggregability with the color material included in the water-based ink is improved. Furthermore, permeability of the pretreatment ink can also be improved. Thus, the water-based ink can be more effectively prevented from smearing.

The cationic resin may be a resin having a cationic group such as an amino group, an ammonium group, an amide group, and a -NHCONH₂ group. The cationic resin may be synthesized by a known method or may be a commercially available product.

The cationic resin may be synthesized by a known method or may be a commercially available product. Examples of the commercially available product include APC-810 and 815; D-6010, 6020, 6030, 6040, 6050, 6060, 6080, and 6310, DEC-50, 53, 56, and 65; FL-14, 42, 44LF, 61, 2099, 2250, 2273, 2350, 2550, 2565, 2599, 2650, 2850, 2949, 3050, 3150, 4340, 4420, 4440, 4450, 4520, 4530, 4535, 4540, 4620, and 4820; FQP-1264; RSL-18-22, 4071H, 4400, 8391, 8391H, HD70C, and HF70D; WS-72 (manufactured by SNF company), ARAFIX 100, 251S, 255, and 255LOX (manufactured by ARAKAWA CHEMICAL INDUSTRIES, LTD.), DK-6810, 6853, and 6885; WS-4010, 4011, 4020, 4024, 4027, and 4030 (manufactured by SEIKO PMC CORPORATION), SENKA F-300; PAPYOGEN P-105, P-113, P-271, and P-316; PITCHNOL QG5A; MILLIOGEN P-20; UNISENCE FPA100L, FPA101L, FPA102L, FPA1000L, FPA1001L, FPA100LU, FPA102LU, FPA1000LU; UNISENCE FCA1000L, FCA1001L, FCA1002L, FCA1003L, and FCA5000L; UNISENCE KCA100L, KCA100LU, KCA1000LU, and KCA1001LU; UNISENCE KHE100L, KHE101L, KHE102L, E104L, KHE105L, KHE107L, KHE1000L, KHE1001L; UNISENCE KHP10P, KHP11L, KHP10LU, KHP11LU, KHP12LU, and KHP20LU: UNISENCE KHF10L and KHF11L; UNISENCE FPV1000L, and FPV1000LU; UNISENCE FCV1000L; UNISENCE ZCA1000L, ZCA1001L, ZCA1002L, and ZCA5000L; UNISENCE KPV100LU and KPV1000LU (manufactured by SENKA corporation), PARALOCK 410K101, 410K111, 420K308, 420K300, 460K313, 460K318, 470K308, 480K300, 490K300, 490K309, 500K30E, 500K40E, 59D, 920AP500, 975AP500, PD700, PD714L, PD714S, and P600 (manufactured by ASADA CHEMICAL INDUSTRY CO., LTD.), Sumirez Resin 650(30), 675A, 6615, and SLX-1 (manufactured by Taoka Chemical Co., Ltd.), EP-1137; MZ-477 and 480; NS-310X and 625XC (manufactured by TAKAMATSU OIL&FAT CO.,LTD.), PAA-D11-HCL, D19-HCL, D41-HCL, D19A; PAA-HCL-03, 05, 3L, and 10L; PAA-1112CL, 21CL, AC5050A, N5050CL, and SA; PAS-A-1 and 5; PAS-H-1L, 5L, and 10L; PAS-J-81 and 81L; PAS-M-1, 1A, and 1L; PAS-21, 21CL, 22SA-40, 24, 92, 92A, 880, 2201CL, and 2401 (manufactured by NITTOBO MEDICAL CO.,LTD.), PP-17 (manufactured by Meisei Chemical Works, Ltd.); CATIOMASTER PD-1, 7, 30, A, PDT-2, PE-10, PE-30, DT-EH, EPA-SK01, and TMHMDA-E (manufactured by Yokkaichi Chemical Company Limited), and JETFIX 36N, 38A, and 5052 (manufactured by Satoda Chemical Industrial Co., Ltd.).

Note that, the cationic resin may be dissolved in the pretreatment ink or dispersed as resin particles.

The metal salt may be a polyvalent metal salt including at least divalent or more polyvalent metal ion and an anion. Examples of the polyvalent metal ion include a calcium ion, a magnesium ion, an aluminum ion, a titanium ion, an iron (II) ion, an iron (III) ion, a cobalt ion, a nickel ion, a copper ion, a zinc ion, a barium ion, and a strontium ion. Among them, one or more selected from a calcium ion, a magnesium ion, a nickel ion, a zinc ion, and an aluminum ion are preferably contained since they are highly interactive with a color material in an ink composition and thus increase an effect of suppressing a smear or unevenness.

The anion may be an inorganic anion or an organic anion. Specific examples of the organic anion include an anion of acetic acid, benzoic acid, salicylic acid, 2,4-dihydroxybenzoic acid, 2,5-dihydroxybenzoic acid, dimethylolpropionic acid, pantothenic acid, succinic acid, maleic acid, glutaric acid, suberic acid, trimellitic acid, and methylmalonic acid. Specific examples of the inorganic anion include a chloride ion, a bromide ion, a nitrate ion, and a sulfate ion.

A content of the cationic compound is not particularly limited. A lower limit of the content of the cationic compound is preferably within a range of 0.5% by mass or more, more preferably within a range of 0.8% by mass or more, and further preferably within a range of 1.0% by mass or more in a total mass of the pretreatment ink. When the content of the cationic compound is within a range of 0.5% by mass or more in a total mass of the pretreatment ink, a color material can be more effectively fixed and the water-based ink can be effectively prevented from smearing. An upper limit of the content of the cationic compound is preferably within a range of 9% by mass or less, more preferably within a range of 8% by mass or less, and further preferably within a range of 7% by mass or less in a total amount of the pretreatment ink. When the content of the cationic compound is within a range of 9% by mass or less in a total mass of the pretreatment ink, a storage stability of the pretreatment ink is increased. Especially when the pretreatment ink is discharged onto a surface of a substrate by an inkjet method, the content of the cationic compound within a range of 9% by mass or less can further increase a discharge stability.

### [Resin]

At least a portion of a resin included in a pretreatment ink may be contained as a resin emulsion. The resin emulsion means an aqueous dispersion liquid formed of a water-soluble solvent serving as a continuous phase and resin particles serving as dispersed particles. Formation of the resin emulsion allows the resin to disperse into a receiving solution as resin particles by the action of steric repulsion or electrostatic repulsion.

The resin to be included in the pretreatment ink is not particularly limited and, for example, those containing one or more resins or copolymer resins selected from the group consisting of an acrylic resin, a styrene-acrylic resin, a polyurethane resin, a polyester resin, a vinyl chloride resin, a vinyl acetate resin, a polyether resin, a vinyl chloride-vinyl acetate copolymer resin, a polyethylene resin, an acrylamide resin, an epoxy resin, a polycarbonate resin, a silicone resin, and a polystyrene resin, or a mixture thereof may be used.

A content of the resin to be included in the pretreatment ink is not particularly limited. A lower limit of the content of the resin is preferably within a range of 0.5% by mass or more, more preferably within a range of 0.8% by mass or more, and further preferably within a range of 1.0% by mass or more in a total mass of the pretreatment ink. An upper limit of the content of the resin is preferably within a range of 20.0% by mass or less, more preferably within a range of 15.0% by mass or less, and further preferably within a range of 10.0% by mass or less in a total mass of the pretreatment ink.

### [Water]

The pretreatment ink may contain water. The water is preferably deionized water rather than water containing various ions. A content of the water is not particularly limited, as long as components can be dispersed or dissolved therein. A lower limit of the content of the water is preferably within a range of 30% by mass or more, more preferably within a range of 50% by mass or more, further preferably within a range of 55% by mass or more, and still further preferably within a range of 60% by mass or more in a total mass of the pretreatment ink. An upper limit of the content of the water is preferably within a range of 85% by mass or less, more preferably within a range of 82% by mass or less, and further preferably within a range of 80% by mass or less in a total mass of the pretreatment ink.

### [Organic solvent]

The pretreatment ink may contain an organic solvent. The organic solvent can disperse or dissolve, for example, the resin therein. Since the pretreatment ink according to the present embodiment includes water, the organic solvent preferably includes a water-soluble solvent.

Examples of the organic solvent include alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; amides such as formamide, acetamide, propaneamide, butaneamide, isobutylamide, pentaneamide, N-methylformamide, N-methylacetamide, N-methylpropaneamide, N-methylbutaneamide, N-methylisobutylamide, N-methylpentaneamide, N-ethylformamide, N-ethylacetamide, N-ethylpropaneamide, N-ethylbutaneamide, N-ethylisobutylamide, N-ethylpentaneamide, N-propylformamide, N-propylacetamide, N-propylpropaneamide, N-propylbutaneamide, N-propylisobutylamide, N-propylpentaneamide, N-isopropylformamide, N-isopropylacetamide, N-isopropylpropaneamide, N-isopropylbutaneamide, N-isopropylisobutylamide, N-isopropylpentaneamide, N-butylformamide, N-butylacetamide, N-butylpropaneamide, N-butylbutaneamide, N-butylisobutylamide, N-butylpentaneamide, N,N-dimethylformamide, N,N-dimethylacetamide, N,N-dimethylpropaneamide, N,N-dimethylbutaneamide, N,N-dimethylisobutylamide, N,N-dimethylpentaneamide, N,N-diethylformamide, N,N-diethylacetamide, N,N-diethylpropaneamide, N,N-diethylbutaneamide, N,N-diethylisobutylamide, N,N-diethylpentaneamide, N,N-dipropylformamide, N,N-dipropylacetamide, N,N-dipropylpropaneamide, N,N-dipropylbutaneamide, N,N-dipropylisobutylamide, N,N-dipropylpentaneamide, N,N-diisopropylformamide, N,N-diisopropylacetamide, N,N-diisopropylpropaneamide, N,N-diisopropylbutaneamide, N,N-diisopropylisobutylamide, N,N-diisopropylpentaneamide, N,N-dibutylformamide, N,N-dibutylacetamide, N,N-dibutylpropaneamide, N,N-dibutylbutaneamide, N,N-dibutylisobutylamide, N,N-dibutylpentaneamide, N-ethyl-N-methylformamide, N-ethyl-N-methylacetamide, N-ethyl-N-methylpropaneamide, N-ethyl-N-methylbutaneamide, N-ethyl-N-methylisobutylamide, N-ethyl-N-methylpentaneamide, N-methyl-N-propylformamide, N-methyl-N-propylacetamide, N-methyl-N-propylpropaneamide, N-methyl-N-propylbutaneamide, N-methyl-N-propylisobutylamide, N-methyl-N-propylpentaneamide, N-ethyl-N-propylformamide, N-ethyl-N-propylacetamide, N-ethyl-N-propylpropaneamide, N-ethyl-N-propylbutaneamide, N-ethyl-N-propylisobutylamide, and N-ethyl-N-propylpentaneamide; ketones or keto-alcohols such as acetone and diacetone alcohol; ethers such as tetrahydrofuran and dioxane; oxyethylene- or oxypropylene-copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol: tetrahydric alcohols such as mesoerythritol and pentaerythritol; monoalkylethers such as ethylene glycol monomethyl (or ethyl, isopropyl, n-butyl, isobutyl, n-hexyl, 2-ethylhexyl) ether, diethylene glycol monomethyl (or ethyl, isopropyl, n-butyl, isobutyl, n-hexyl, 2-ethylhexyl) ether, triethylene glycol monormethyl (or ethyl, propyl, isopropyl, n-butyl, isobutyl, t-butyl, pentyl, n-hexyl, 2-ethylhexyl) ether, propylene glycol monomethyl (or ethyl, propyl, isopropyl, n-butyl, isobutyl, t-butyl, pentyl, n-hexyl, 2-ethylhexyl) ether, dipropylene glycol monomethyl (or ethyl, propyl, isopropyl, n-butyl, isobutyl, t-butyl, pentyl, n-hexyl, 2-ethylhexyl) ether, and tripropylene glycol monomethyl (or ethyl, propyl, isopropyl, n-butyl, isobutyl, t-butyl, pentyl, n-hexyl, 2-ethylhexyl) ether; dialkyl ethers of polyhydric alcohols such as diethylene glycol dimethyl ether, diethylene glycol diethyl ether, diethylene glycol ethyl methyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol dimethyl ether, propylene glycol diethyl ether, propylene glycol ethyl methyl ether, dipropylene glycol dimethyl ether, dipropylene glycol diethyl ether, dipropylene glycol ethyl methyl ether, tripropylene glycol dimethyl ether, tripropylene glycol diethyl ether, and tripropylene glycol ethyl methyl ether; acetates such as ethylene glycol monomethyl (or ethyl, propyl, isopropyl, n-butyl, isobutyl, t-butyl, pentyl, n-hexyl, 2-ethylhexyl) ether acetate, diethylene glycol monomethyl (or ethyl, propyl, isopropyl, n-butyl, isobutyl, t-butyl, pentyl, n-hexyl, 2-ethylhexyl) ether acetate, triethylene glycol monomethyl (or ethyl, propyl, isopropyl, n-butyl, isobutyl, t-butyl, pentyl, n-hexyl, 2-ethylhexyl) ether acetate, propylene glycol monomethyl (or ethyl, propyl, isopropyl, n-butyl, isobutyl, t-butyl, pentyl, n-hexyl, 2-ethylhexyl) ether acetate, dipropylene glycol monomethyl (or ethyl, propyl, isopropyl, n-butyl, isobutyl, t-butyl, pentyl, n-hexyl, 2-ethylhexyl) ether acetate, tripropylene glycol monomethyl (or ethyl, propyl, isopropyl, n-butyl, isobutyl, t-butyl, pentyl, n-hexyl, 2-ethylhexyl) ether acetate, ethylene glycol diacetate, diethylene glycol diacetate, propylene glycol diacetate, and dipropylene glycol diacetate; lactones such as γ-butyrolactone, α-methylene-γ-butyrolactone, ε-caprolactone, γ-valerolactone, γ-hexanolactone, γ-heptanolactone, δ-valerolactone, δ-hexanolactone, δ-heptalactone, δ-octalactone, δ-nonalactone, δ-decalactone, δ-undecalactone, γ,γ-dimethyl-γ-butyrolactone, α-methyl-γ-butyrolactone, γ-crotolactone, α-methylene-γ-butyrolactone, β-methyl-γ-butyrolactone, and 6-methylvalerolactone; carbonic acid esters such as 2,3-butylene carbonate, ethylene carbonate, and propylene carbonate; oxazolidinone solvents such as 3-methyl-2-oxazolidinone, 3-ethyl-2-oxazolidinone, and N-vinylmethyloxazolidinone; alkyl alcohols having 1 to 5 carbon atoms such as methyl alcohol, ethyl alcohol, n-propyl alcohol, isopropyl alcohol, n-butyl alcohol, sec-butyl alcohol, tert-butyl alcohol, isobutyl alcohol, and n-pentanol; monohydric alcohols such as 3-methoxy-3-methyl-1-butanol, 3-methoxy-1-propanol, 1-methoxy-2-propanol, and 3-methoxy-n-butanol; ketones or keto alcohols such as acetone and diacetone alcohol; ethers such as tetrahydrofuran and dioxane; oxyethylene- or oxypropylene-copolymers such as polyethylene glycol and polypropylene glycol; diols such as ethylene glycol, propylene glycol, diethylene glycol, dipropylene glycol, 1,3-propanediol, isobutylene glycol, triethylene glycol, tripropylene glycol, tetraethylene glycol, 1,3-propanediol, 2-methyl-1,2-propanediol, 2-methyl-1,2-propanediol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and 2-methyl-2,4-pentanediol; triols such as glycerin, trimethylolethane, trimethylolpropane, and 1,2,6-hexanetriol: tetrahydric alcohols such as mesoerythritol and pentaerythritol; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; nitrogen-containing heterocyclic compounds such as N-methyl-2-pyrrolidone, 2-pyrrolidone, and 1,3-dimethyl-2-imidazolidinone; cyclic compounds such as γ-butyrolactone and sulfolane; morpholines such as N-methylmorpholine, N-ethylmorpholine, and N-formylmorpholine; and terpene solvents.

Among them, an organic solvent selected from the group consisting of alkane diol and monool is preferably contained. This can decrease static surface tension S_{P} of the pretreatment ink and improve permeability of the pretreatment ink and thus the water-based ink applied on the pretreatment ink moderately wets and spreads to effectively prevent poor filling, resulting in an image with high reproducibility.

The alkane diol refers to a polyhydric alcohol having two hydroxy groups (OH groups) and the monool refers to a monohydric alcohol having one hydroxy group (OH group). The alkane diol is preferably 1,2-alkane diol. Examples of the 1,2-alkane diol include 1,2-propanediol, 1,2-butanediol, 1,2-pentanediol, 1,2-hexanediol, 4-methyl-1,2-pentanediol, and 3,3-dimethyl-1,2-butanediol. Examples of the monool include methyl alcohol, ethyl alcohol, n-propyl alcohol, isopropyl alcohol, n-butyl alcohol, sec-butyl alcohol, tert-butyl alcohol, isobutyl alcohol, n-pentanol, 3-methoxy-3-methyl-1-butanol, 3-methoxy-1-propanol, 1-methoxy-2-propanol, and 3-methoxy-n-butanol.

A content of the organic solvent is not particularly limited as long as components can be dispersed or dissolved therein. A lower limit of the content of the organic solvent is preferably within a range of 5% by mass or more, more preferably within a range of 10% by mass or more, and further preferably within a range of 12% by mass or more in a total mass of the pretreatment ink. An upper limit of the content of the organic solvent is preferably within a range of 50% by mass or less, more preferably within a range of 45% by mass or less, and further preferably within a range of 40% by mass or less in a total mass of the pretreatment ink.

### [Surfactant]

The pretreatment ink may contain a surfactant. The surfactant is not particularly limited, but a non-ionic surfactant, a fluorosurfactant, an acetylene glycol surfactant, a silicone (silicon) surfactant, etc. are preferably used.

Examples of the non-ionic surfactant NOIGEN, EPAN, and SORGEN (all manufactured by DKS Co. Ltd.), EMULGEN, AMIET, and EMASOL (all manufactured by Kao Corporation), and NAROACTY, EMULMIN, and SANNONIC (all manufactured by Sanyo Chemical Industries, Ltd.).

Examples of the fluorosurfactant include MEGAFACE F-114, F-410, F-440, F-447, F-553, and F-556v (manufactured by DIC Corporation) and SURFLON S-211, S-221, S-231, S-233, S-241, S-242, S-243, S-420, S-661, S-651, and S-386 (manufactured by AGC SEIMI CHEMICAL CO., LTD.).

Examples of the acetylene glycol surfactant include SURFYNOL 104, 82, 420, 440, 465, 485, TG, and 2502, DYNOL 604, DYNOL 607, and DYNOL 960 (all acetylene glycol surfactants; manufactured by Evonik Industries AG), OLFINE E1004, E1010, PD004, and EXP4300 (all acetylene glycol surfactants; manufactured by Nissin Chemical Industry Co., Ltd.), and ACETYLENOL EH, E40, E60, E81, E100, and E200 (all acetylene glycol surfactants; manufactured by Kawaken Fine Chemicals Co., Ltd.).

Examples of the silicone (silicon) surfactant include FZ-2122, FZ-2110, FZ-7006, FZ-2166, FZ-2164, FZ-7001, FZ-2120, SH8400, FZ-7002, FZ-2104, 8029 ADDITIVE, 8032 ADDITIVE, 57 ADDITIVE, 67 ADDITIVE, and 8616 ADDITIVE (all manufactured by Dow Toray Co., Ltd.), KF-6012, KF-6015, KF-6004, KF-6013, KF-6011, KF-6043, KP-104, 110, 112, 323, 341, and 6004 (all manufactured by Shin-Etsu Chemical Co., Ltd.), BYK-300, BYK-302, BYK-306, BYK-307, BYK-320, BYK-325, BYK-330, BYK-331, BYK-333, BYK-337, BYK-341, BYK-344, BYK-345, BYK-346, BYK-347, BYK-348, BYK-349, BYK-3420, BYK-3450, BYK-3451, BYK-3456, BYK-375, BYK-377, BYK-378, BYK-UV3500, BYK-UV3510, BYK-310, BYK-315, BYK-370, BYK-UV3570, BYK-322, BYK-323, BYK-350, BYK-352, BYK-354, BYK-355, BYK-358N, BYK-361N, BYK-380N, BYK-381, BYK-392, BYK-340, BYK-Silclean 3700, and BYK-Dynwet 800 (all manufactured by BYK-Chemie), SILFACE SAG 002, SILFACE SAG 005, SILFACE SAG 008, SILFACE SAG 014, SILFACE SAG 503A, SILFACE SJM-002, and SILFACE SJM-003 (all Nissin Chemical Industry Co., Ltd.), TEGO FLOW 425, TEGO Glide 100, 110, 130, 410, 432, 440, 450, 482, 490, 492, 494, 496, and ZG400, TEGO Twin 4000, TEGO Twin 4100, TEGO Wet 240, TEGO Wet 250, TEGO Wet 240, KL245, 250, 260, 265, 270, and 280 (all manufactured by Evonik Industries AG).

Note that, although an anionic surfactant may be used, in a case where the anionic surfactant is to be used, it is preferably to confirm whether the anionic surfactant can be mixed with the pretreatment ink since the pretreatment ink contains a cationic compound.

When the anionic surfactant is used, those capable of being mixed with the pretreatment ink among EMAL, LATEMUL, PELEX, NEOPELEX, and DEMOL (all manufactured by Kao Corporation) and SUNNOL, LIPOLAN, LIPON, and LIPAL (all manufactured by Lion Corporation), etc. may be used as the anionic surfactant.

The surfactant may be used alone or two or more thereof may be used in combination. A content of the surfactant is appropriately adjusted depending on miscibility and washability of the ink, wettability on an internal wall of a flow channel, and inkjet dischargeability.

A content of the surfactant is not particularly limited. A lower limit of the content of the surfactant is preferably within a range of 0.50% by mass or more, more preferably within a range of 0.60% by mass or more, and further preferably within a range of 0.70% by mass or more in a total mass of the pretreatment ink. An upper limit of the content of the surfactant is preferably within a range of 5.0% by mass or less, more preferably within a range of 4.0% by mass or less, and further preferably within a range of 3.0% by mass or less in a total mass of the pretreatment ink.

### [Other components]

The pretreatment ink may further include a conventionally known additive, if necessary. Examples of the additive include a viscosity adjusting agent, a pH adjusting agent, an antioxidizing agent, a preservative, and a fungicide.

A method for preparing the pretreatment ink is not particularly limited. For example, the pretreatment ink may be prepared by adding a resin, a surfactant, and optionally other components to a water-soluble solvent.

Surface tension of the pretreatment ink is not particularly limited. An upper limit of the surface tension is preferably 30.0 mN/m or less, more preferably 29.0 mN/m or less, and further preferably 28.0 mN/m or less. A lower limit of the surface tension is preferably 20.0 mN/m or more, more preferably 21.0 mN/m or more, and further preferably 22.0 mN/m or more, Note that, the surface tension is a value as measured by a Wilhelmy method (model: DY-300, manufactured by Kyowa Interface Science Co., Ltd) at a measurement temperature of 25°C.

A pretreatment ink having a predetermined range of surface tension can be prepared by adjusting a type or a content of a water-soluble solvent or a surfactant to be included in the pretreatment ink. Static surface tension Sₒ of the overcoat ink, static surface tension S_{c} of the water-based ink, and static surface tension S_{P} of the pretreatment ink to be included in an ink set preferably satisfies the below-described relationship:

Static surface tension of overcoat ink Sₒ ≤ Static surface tension of pretreatment ink S_{P} < Static surface tension of water-based ink S_{C}

Such a relationship of the static surface tension can effectively prevent the water-based ink from smearing. The reason for this is not clear, but it is presumed because the water-based ink is impacted on a surface of the pretreatment ink and then flows in a shrinking direction (inward direction), which effectively controls wet-spreading of the water-based ink impacted on the surface of the pretreatment ink to thereby effectively prevent the water-based ink from smearing. It is also presumed because the overcoat ink flows in a spreading direction (outward direction) and a mixture (mixture of the pretreatment ink and the water-based ink) flows in a shrinking direction (inward direction) at an interface between the overcoat ink and the mixture (mixture of the pretreatment ink and the water-based ink), which effectively controls wet-spreading of the water-based ink to thereby effectively prevent the water-based ink from smearing.

Note that, the overcoat ink may be impacted onto a water-based ink layer formed of a solidified or dried water-based ink, but is preferably discharged and impacted onto a substrate while the mixture of the pretreatment ink and the water-based ink is present as liquid (is flowable) after the water-based ink is impacted onto the substrate. When the overcoat ink is impacted onto the mixture of the pretreatment ink and the water-based ink on the substrate while the mixture of the pretreatment ink and the water-based ink is highly flowable, the water-based ink can be prevented from spreading. Additionally, when the overcoat ink is impacted onto the mixture of the pretreatment ink and the water-based ink on the substrate while the mixture of the pretreatment ink and the water-based ink is highly flowable, a higher speed printing and thus a higher production rate of a recorded matter are enabled.

Note that, for static surface tension of each ink, a lower limit of a difference between S_{P} and S_{C} (S_{c} - S_{P}) is not particularly limited, but is preferably 0.5 mN/m or more, more preferably 0.7 mN/m or more, and further preferably 0.9 mN/m or more. The difference between S_{P} and S_{C} (S_{c} - S_{P}) of 0.5 mN/m or more can more effectively prevent the water-based ink from smearing. The reason for this is not clear, but it is presumed because the water-based ink is impacted on a surface of the pretreatment ink and then flows in a shrinking direction (inward direction), which more effectively prevents the water-based ink from smearing.

Furthermore, an upper limit of the difference between S_{P} and S_{C} (S_{c} - S_{P}) is not particularly limited, but is preferably 7.0 mN/m or less, more preferably 5.5 mN/m or less, and further preferably 3.0 mN/m or less. The difference between S_{P} and S_{C} (S_{c} - S_{P}) of 7.0 mN/m or less can effectively prevent the water-based ink from cissing. Although the reason for this is not necessarily clear, it is presumed because the difference between S_{P} and S_{C} (S_{c} - S_{P}) of 7.0 mN/m or less allows the water-based ink to moderately wet and spread to fill a substrate well.

Furthermore, a lower limit of a difference between S_{O} and S_{P} (S_{P} - S_{O}) is not particularly limited, but is preferably 0 mN/m or more, more preferably 0.2 mN/m or more, and further preferably 0.4 mN/m or more. The difference between S_{O} and S_{P} (S_{P} - S_{O}) of 0 mN/m or more can prevent the water-based ink from smearing. Although the reason for this is not necessarily clear, it is presumed because when the difference between So and S_{P} (S_{P} - So) is 0 mN/m or more, a mixture (mixture of the pretreatment ink and the water-based ink) flows in a shrinking direction (inward direction) relative to the overcoat ink to prevent the water-based ink from smearing.

Furthermore, an upper limit of the difference between So and S_{P} (S_{P} - S_{O}) is not particularly limited, but is preferably 3.5 mN/m or less, more preferably 3.0 mN/m or less, and further preferably 2.7 mN/m or less. The difference between S_{O} and S_{P} (S_{P} - S_{O}) of 3.5 mN/m or less can more effectively prevent the water-based ink from smearing. Although the reason for this is not necessarily clear, it is presumed because as described below. When the difference between So and S_{P} (S_{P} - So) is too large, the overcoat ink tends to wet and spread too widely, so that the mixture (mixture of the pretreatment ink and the water-based ink) physically follows the overcoat ink to wet and spread, resulting in relative deterioration of a smear of the water-based ink. The difference between So and S_{P} (S_{P} - So) of 3.5 mN/m or less can more effectively prevent the water-based ink from smearing due to wide wet-spreading of the overcoat ink.

Furthermore, a lower limit of a difference between Sₒ and S_{c} (S_{c} - So) is not particularly limited, but is preferably 0.6 mN/m or more, more preferably 0.8 mN/m or more, and further preferably 0.9 mN/m or more. The difference between Sₒ and S_{c} (S_{c} - So) of 0.6 mN/m or more can more effectively prevent the water-based ink from smearing. Although the reason for this is not necessarily clear, it is presumed because when the difference between Sₒ and S_{c} (S_{c} - So) is 0.6 mN/m or more, a mixture (mixture of the pretreatment ink and the water-based ink) flows in a shrinking direction (inward direction) relative to the overcoat ink to prevent the water-based ink from smearing.

Furthermore, an upper limit of the difference between Sₒ and S_{c} (S_{c} - So) is not particularly limited, but is preferably 7.5 mN/m or less, more preferably 6.0 mN/m or less, and further preferably 4.5 mN/m or less. In particular, the difference between Sₒ and S_{c} (S_{c} - Sₒ) of 7.5 mN/m or less can more effectively prevent the water-based ink from smearing. Although the reason for this is not necessarily clear, it is presumed because as described below. When the difference between Sₒ and S_{c} (S_{c} - So) is too large, the overcoat ink tends to wet and spread too widely, so that the mixture (mixture of the pretreatment ink and the water-based ink) physically follows the overcoat ink to wet and spread, resulting in relative deterioration of a smear of the water-based ink. The difference between Sₒ and S_{c} (S_{c} - So) of 7.5 mN/m or less can more effectively prevent the water-based ink from smearing due to wide wet-spreading of the overcoat ink.

### <<Recording method>>

A recording method according to the present embodiment is an inkjet recording method using an ink set including the pretreatment ink, the water-based ink, and the overcoat ink as described above, the method including discharging each of the inks included in the ink set onto a substrate by an inkjet method.

A resin included in the overcoat ink contains (a) a resin having a glass transition temperature of 20°C or more and/or (b) a styrene-acrylic resin having a glass transition temperature of 6°C or more. Therefore, an overcoat layer with high slipperiness can be formed on a surface of a recorded matter also in the recording method according to the present embodiment.

The recording method according to the present embodiment may be a scanning method in which an ink is discharged using an inkjet head that moves in a direction perpendicular to a transport direction and that reciprocates in coordination with the substrate (recording medium) to thereby print an image on an entire substrate (recording medium) or may be a one-pass method in which an inkjet head is passed over a substrate once to form an image. Among them, when static surface tensions of the inks included in the ink set are controlled to fall within a range of, for example, Sₒ ≤ S_{P} < S_{C}, a recording method in which inkjet discharge is achieved by the one-pass method is preferably used. The recording method in which inkjet discharge is achieved by the one-pass method enables higher speed printing, so that time that it takes for each ink to impact on the substrate becomes shorter and the water-based ink spreads around an impact position thereof to cause a more significant smear. When static surface tensions of the inks included in the ink set are controlled to fall within a range of, for example, Sₒ ≤ S_{P} < S_{C}, the benefit of higher speed printing can be enjoyed without causing a problem that may occur during the recording method in which inkjet discharge is achieved by the one-pass method even if the recording method in which inkjet discharge is achieved by the one-pass method such as a line head method is used.

FIG. 1 shows a device 1 that is configured to discharge an ink set on a substrate and for which the recording method according to the present embodiment can be suitably used. This device 1 includes a pretreatment ink discharge unit 21 configured to discharge a pretreatment ink 11, a water-based ink discharge unit 22 configured to discharge a water-based ink 12, and an overcoat ink discharge unit 23 configured to discharge an overcoat ink 13 in this order along a conveying direction of a substrate (recording medium). The device is characterized by including no drying mechanism between the pretreatment ink discharge unit 21 and the water-based ink discharge unit 22 or between the water-based ink discharge unit 22 and the overcoat ink discharge unit 23.

When static surface tensions of the inks in the above-described ink set are controlled to fall within a predetermined range, that is, to satisfy the relationship "S_{O} ≤ S_{P} < S_{C}", the device 1 including no drying mechanism between discharge units as shown in FIG. 1 can be used to effectively prevent the water-based ink from smearing even in the case of high-speed printing using a one-pass method in which a drying treatment is not performed until all inks in the ink set are discharged on a substrate.

Note that, although the inkjet recording method using an ink set of the second embodiment including a pretreatment ink, a water-based ink, and an overcoat ink has been described as the recording method according to the present embodiment, the water-based ink can also be effectively prevented from smearing in an ink set of the first embodiment including a water-based ink and an overcoat ink as long as the ink set satisfies the relationship "S_{O} < S_{C}".

Furthermore, although a device including a drying mechanism between discharge units may be used for printing, use of the device including no drying mechanism between discharge units enables a smaller device and a shorter entire conveying portion while the water-based ink can be effectively prevented from smearing, which increases a production rate of a recorded matter.

A recording rate (conveying rate of a substrate) in the recording method according to the present embodiment is preferably 30 m/min or more, more preferably 40 m/min or more, and further preferably 50 m/min or more when the inks in the above-described ink set have static surface tensions controlled to fall within a predetermined range, that is, to satisfy the relationship "S_{O} ≤ S_{P} < S_{C}". The water-based ink can be effectively prevented from smearing even when the substrate (recording medium) is conveyed at such a high speed and each of the inks included in the ink set is discharged on the substrate by an inkjet method.

Moreover, each of the inks included in the ink set is preferably dried after the ink is discharged. This can more effectively remove a volatile component included in each of the inks and can more effectively prevent the water-based ink from smearing.

A method for drying each of the inks may be a method of drying the ink with a heater from a back side (opposite to a surface onto which the ink has discharged) of the substrate or a method of blowing warm air to a recorded matter. Note that, the ink may not be purposefully dried after the ink is discharged, in other words, the ink may be dried by so-called air drying.

### <<Method for producing recorded matter>>

A method for producing a recorded matter according to the present embodiment is a method for producing a recorded matter using an ink set including the pretreatment ink, the water-based ink, and the overcoat ink as described above, the method including discharging each of the inks included in the ink set onto a substrate by an inkjet method.

A resin included in the overcoat ink contains (a) a resin having a glass transition temperature of 20°C or more and/or (b) a styrene-acrylic resin having a glass transition temperature of 6°C or more. Therefore, an overcoat layer with high slipperiness can be formed on a surface of a recorded matter also in the method for producing a recorded matter according to the present embodiment.

When static surface tensions of the inks in the above-described ink set are controlled to fall within a predetermined range, that is, to satisfy the relationship "S_{O} ≤ S_{P} < S_{C}", the device 1 including no drying mechanism between discharge units as shown in FIG. 1 can be used to obtain a recorded matter with high slipperiness while effectively preventing the water-based ink from smearing even in the case of high-speed printing using a one-pass method.

Moreover, each of the inks included in the ink set is preferably dried after the ink is discharged. This can more effectively remove a volatile component included in each of the inks and can more effectively prevent the water-based ink from smearing. A method for drying each of the inks may be a method as described regarding the recording method.

### <<Recorded matter>>

Layers constituting a recorded matter produced by the above-described method for producing recorded matter will be described.

### [Medium (recording medium)]

A substrate (recording medium) that can be used in the recording method according to the present embodiment is not particularly limited and various substrates may be used including a non-absorbing substrate such as a resin substrate, a metal plate, and glass or an absorbing substrate such as paper and a fabric or a substrate of which surface is coated such as a substrate including a receiving layer. The same applies to a substrate that can be used in a method for producing a recorded matter according to the below-described embodiment.

Examples of the non-absorbing substrate include a resin substrate such as a polyester resin, polypropylene synthetic paper, a vinyl chloride resin, and a polyimide resin; metal, metal foil-coated paper, glass, synthetic rubber, and naturel rubber.

Examples of the absorbing substrate include woody paper, wood containing paper, woodfree paper, cotton, artificial fiber textile, silk, hemp, cloth, nonwoven fabric, and leather.

Examples of the substrate of which surface is coated include coated paper, art paper, cast-coated paper, light-weight coated paper, and ultra lightweight coat paper.

Among these substrates, in the case of an ink set including a water-based ink, the absorbing substrate is preferably used. In particular, when this water-based ink is a water-based ink containing an alkane diol organic solvent having a water-octanol partition coefficient of -0.3 or less, the water-based ink can be effectively prevented from permeating into the substrate (recording medium), making it possible to effectively suppress poor filling due to a partial decrease of print density.

### [Water-based ink layer]

A water-based ink layer is a layer formed by volatilizing a solvent included in the above-described water-based ink. For example, when the water-based ink contains a color material, the water-based ink layer represents a decorating layer forming a desired image or a recording layer.

### [Overcoat layer]

An overcoat layer is a layer formed by volatilizing a solvent included in the above-described overcoat ink and capable of conferring a desired function by including a specific component. Furthermore, this overcoat layer is disposed over the water-based ink layer. The overcoat layer is a layer for conferring abrasion resistance on a recorded matter.

The resin included in the overcoat ink contains (a) a resin having a glass transition temperature of 20°C or more and/or (b) a styrene-acrylic resin having a glass transition temperature of 6°C or more. This allows an overcoat layer with high slipperiness to be formed on a surface of a recorded matter.

In this case, a slip angle on a surface of the overcoat layer is preferably less than 28.0°, more preferably 27.5° or less, and further preferably 27.0° or less. The overcoat layer having such a slip angle has higher slipperiness, therefore, a plurality of recorded matters stacked on top of each other can be dispensed one by one at high speed with a relatively high load applied.

### <<Device>>

A device according to the present embodiment is a device that is configured to discharge an ink set and for which an ink set including a pretreatment ink, a water-based ink, and an overcoat ink can be used. Specifically, the device at least includes a pretreatment ink discharge unit configured to discharge a pretreatment ink, a water-based ink discharge unit configured to discharge a water-based ink, and an overcoat ink discharge unit in this order along a conveying direction of the substrate.

A resin included in the overcoat ink contains (a) a resin having a glass transition temperature of 20°C or more and/or (b) a styrene-acrylic resin having a glass transition temperature of 6°C or more. Thus, an overcoat layer with high slipperiness can be formed over a water-based ink layer formed of a water-based ink.

When static surface tensions of the inks in the above-described ink set are controlled to fall within a predetermined range, that is, to satisfy the relationship "S_{O} ≤ S_{P} < S_{C}", the water-based ink can be effectively prevented from smearing even in the case of printing using an inkjet recording method.

Note that, a device including a drying mechanism between a water-based ink discharge unit and an overcoat ink discharge unit and a drying mechanism between a pretreatment ink discharge unit and a water-based ink discharge unit may also be used. Furthermore, for a device including a pretreatment ink discharge unit, a water-based ink discharge unit, and an overcoat ink discharge unit, the device may include no drying mechanism between the water-based ink discharge unit and the overcoat ink discharge unit and include a drying mechanism between the pretreatment ink discharge unit and the water-based ink discharge unit. Moreover, the device may include no drying mechanism between the pretreatment ink discharge unit and the water-based ink discharge unit and include a drying mechanism between the water-based ink discharge unit and the overcoat ink discharge unit. The device including no drying mechanism between the water-based ink discharge unit and the overcoat ink discharge unit and including a drying mechanism between the pretreatment ink discharge unit and the water-based ink discharge unit as shown in FIG. 1 enables a smaller device and a shorter entire conveying portion, which increases a production rate of a recorded matter.

Moreover, this device preferably includes a drying mechanism configured to dry each of the inks included in the ink set after the ink is discharged. This can more effectively remove a volatile component included in each of the inks and can more effectively prevent the water-based ink from smearing.

A drying mechanism configured to dry an ink after the ink is discharged is not particularly limited, and may be a heater or a mechanism configured to blow hot air or room temperature air.

Furthermore, a discharging method from a discharge unit may be a piezoelectric method, a thermal method, or an electrostatic method. Either method can effectively prevent a water-based ink from smearing.

### EXAMPLES

Hereinafter, the present invention will be described in more detail with reference to Examples, but the present invention is not limited thereto in any way.

### 1. Preparation of overcoat ink

Components listed in Tables 1 and 2 were mixed and stirred at room temperature (20 to 25°C) for 1 hour. Then, it was confirmed that there was no dissolving residue. Then, the resulting solutions were filtered through a membrane filter to thereby prepare overcoat inks of Examples and Comparative Examples.

### 2. Evaluation of overcoat ink

The overcoat inks of Examples and Comparative Examples were evaluated.

### (Slip angle)

The overcoat inks of Examples and Comparative Examples were used to form overcoat layers and slip angles on surfaces of the overcoat layers were determined. Specifically, the overcoat inks were applied on pieces of MF paper (coated board paper manufactured by Ojimateria Co., ltd) with a bar coater #4 and dried to form overcoat layers. Slip angles on surfaces of the overcoat layers were measured by a friction tester AN-S2 manufactured by Toyo Seiki Seisaku-sho, Ltd.

### (Evaluation of discharge stability)

The overcoat inks of Examples and Comparative Examples were discharged from all nozzles of an inkjet head (KJ4B-QA manufactured by KYOCERA Corporation) at a frequency of 12 kHz and left to stand for 10 minutes. Then, the overcoat inks were discharged from all nozzles again under the same discharge conditions and the presence or absence of a nozzle from which the overcoat inks were not discharged was visually observed.

### Evaluation criteria

Good (indicated by circle symbol (o)): There was no nozzle from which the overcoat inks were not discharged. Fair (indicated by triangle symbol (Δ)): There was a nozzle from which the overcoat inks were not discharged, but the overcoat inks were discharged from all nozzles immediately after cleaning. Poor (indicated by cross symbol (x)): There was a nozzle from which the overcoat inks were not discharged, and the nozzle was difficult to restore even after cleaning. The overcoat ink evaluated for the discharge stability as Good or Fair can be practically used.

### (Evaluation of abrasion resistance)

A recorded matter was evaluated for abrasion resistance. Specifically, recorded matters on which overcoat layers were formed of the overcoat inks of Examples and Comparative Examples were produced. Using a color fastness rubbing tester (AB-301 manufactured by TESTER SANGYO CO,. LTD.), recording surfaces of the recorded matters on which the overcoat layers were formed were brought in contact with pieces of KANAKIN No. 3 (cotton) and reciprocated 500 times with a load of 500 g applied. Thus-obtained samples were evaluated according to evaluation criteria below. Evaluation criteria
A: A coated film (overcoat layer) was not peeled. B: A peeled area of a coated film(overcoat layer) was less than 10% of a total tested area. C: A peeled area of a coated film(overcoat layer) was 10% or more and less than 200 of a total tested area. D: A peeled area of a coated film(overcoat layer) was 200 or more and less than 500 of a total tested area. E: A peeled area of a coated film(overcoat layer) was 500 or more of a total tested area. The overcoat ink evaluated for abrasion resistance as any of A to C can be practically used.

**[Table 1]**

| | | | | Example | | | | | | | | | |
|---|---|---|---|---|---|---|---|---|---|---|---|---|---|
| | Product name of resin | Type of resin | Tg | 1-1 | 1-2 | 1-3 | 1-4 | 1-5 | 1-6 | 1-7 | 1-8 | 1-9 | 1-10 |
| | Carboset GA7439 | Acryl | 31 | 14.0 | | | | | | | | | |
| | MOWINYL 6899D | Acryl | 48 | | 14.0 | | | | | | | | |
| | MOWINYL 6969D | Acryl | 73 | | | 14.0 | | | | | | | |
| | NeoCry XK-190 | Acryl | 80 | | | | 14.0 | | | | | | |
| | JE-1056 | Acryl | 82 | | | | | 14.0 | | | | | |
| | MOWINYL 66810 | Acryl | 110 | | | | | | 14.0 | | | | |
| | TAKELAC W-6061 | Urethane | 25 | | | | | | | 14.0 | | | |
| | TAKELAC W-5661 | Urethane | 70 | | | | | | | | 14.0 | | |
| | TAKELAC WS4022 | Urethane | 115 | | | | | | | | | 14.0 | |
| | Sancure 815 | Urethane | 161 | | | | | | | | | | 14.0 |
| | Sancure777F | Urethane | 162 | | | | | | | | | | |
| | ELITEL KZT-8803 | polyester | 61 | | | | | | | | | | |
| | ELITEL KZT-3556S | polyester | 81 | | | | | | | | | | |
| | NeoCryl A-2092 | Acryl-styrene | 8 | | | | | | | | | | |
| | JONCRYL PDX-7430 | Acryl-styrene | 30 | | | | | | | | | | |
| | CE-1042 | Acryl-styrene | 53 | | | | | | | | | | |
| Resin | NeoCryl A-639 | Acryl-styrene | 62 | | | | | | | | | | |
| | JONCRYL PDX-7538 | Acryl-styrene | 75 | | | | | | | | | | |
| | JONCRYL PDX-7696 | Acryl-styrene | 86 | | | | | | | | | | |
| | NeoCryl A-662 | Acryl-styrene | 95 | | | | | | | | | | |
| | KE-1048 | Acryl-styrene | 96 | | | | | | | | | | |
| | NeoCryl A-2091 | Acryl-styrene | 98 | | | | | | | | | | |
| | NeoCryl XK-190 | Acryl | 0 | | | | | | | | | | |
| | BONRON PS-001 | Acryl | 3 | | | | | | | | | | |
| | neocryl A1125 | Acryl | 13 | | | | | | | | | | |
| | TAKELAC W-6110 | Urethane | -20 | | | | | | | | | | |
| | ELITEL KZT-9204 | polyester | 19 | | | | | | | | | | |
| | Joncryl ECO 2124 | Acryl-styrene | -35 | | | | | | | | | | |
| | NE2260 | Acryl-styrene | -10 | | | | | | | | | | |
| | ACRIT UW-550CS | Acryl-styrene | 4 | | | | | | | | | | |
| | J-140A | Acryl-styrene | 5 | | | | | | | | | | |
| Wax | AQUACER531 | | | 1.0 | 1.0 | 1.0 | 1.0 | 1.0 | 1.0 | 1.0 | 1.0 | 1.0 | 1.0 |
| Surfactant | BYK345 | | | 3.0 | 3.0 | 3.0 | 3.0 | 3.0 | 3.0 | 3.0 | 3.0 | 3.0 | 3.0 |
| | Dynol604 | | | | | | | | | | | | |
| Solvent | Propylene glycol | | | 350 | 350 | 35.0 | 35.0 | 35.0 | 35.0 | 35.0 | 35.0 | 35.0 | 350 |
| Water | | | | 47.0 | 47.0 | 47.0 | 47.0 | 47.0 | 47.0 | 47.0 | 47.0 | 47.0 | 47.0 |
| Slip angle | | | | 25.0 | 24.8 | 23.9 | 24.1 | 22.9 | 22.5 | 25.0 | 22.4 | 13.0 | 17.4 |
| Discharge stability | | | | ○ | ○ | ○ | ○ | ○ | ○ | ○ | ○ | ○ | ○ |
| Abrasion resistance | | | | A | A | A | A | A | A | A | A | A | A |

**[Table 1 Continuation]**

| | | | | Example | | | | | | | | | | |
|---|---|---|---|---|---|---|---|---|---|---|---|---|---|---|
| | Product name of resin | Type of resin | Tg | 1-11 | 1-12 | 1-13 | 1-14 | 1-15 | 1-16 | 1-17 | 1-18 | 1-19 | 1-20 | 1-21 |
| | Carboset GA7439 | Acryl | 31 | | | | | | | | | | | |
| | MOWINYL 6899D | Acryl | 48 | | | | | | | | | | | |
| | MOWINYL 6969D | Acryl | 73 | | | | | | | | | | | |
| | NeoCry XK-190 | Acryl | 80 | | | | | | | | | | | |
| | JE-1056 | Acryl | 82 | | | | | | | | | | | |
| | MOWINYL 66810 | Acryl | 110 | | | | | | | | | | | |
| | TAKELAC W-6061 | Urethane | 25 | | | | | | | | | | | |
| | TAKELAC W-5661 | Urethane | 70 | | | | | | | | | | | |
| | TAKELAC WS4022 | Urethane | 115 | | | | | | | | | | | |
| | Sancure 815 | Urethane | 161 | | | | | | | | | | | |
| | Sancure777F | Urethane | 162 | 14.0 | | | | | | | | | | |
| | ELITEL KZT-8803 | polyester | 61 | | 14.0 | | | | | | | | | |
| | ELITEL KZT-3556S | polyester | 81 | | | 14.0 | | | | | | | | |
| | NeoCryl A-2092 | Acryl-styrene | 8 | | | | 14.0 | | | | | | | |
| | JONCRYL PDX-7430 | Acryl-styrene | 30 | | | | | 14.0 | | | | | | |
| | QE-1042 | Acryl-styrene | 53 | | | | | | 14.0 | | | | | |
| | NeoCryl A-639 | Acryl-styrene | 62 | | | | | | | 14.0 | | | | |
| Resin | JONCRYL PDX-7538 | Acryl-styrene | 75 | | | | | | | | 14.0 | | | |
| | JONCRYL PDX-7696 | Acryl-styrene | 86 | | | | | | | | | 14.0 | | |
| | NeoCryl A-662 | Acryl-styrene | 95 | | | | | | | | | | 14.0 | |
| | KE-1048 | Acryl-styrene | 96 | | | | | | | | | | | 14.0 |
| | NeoCryl A-2091 | Acryl-styrene | 98 | | | | | | | | | | | |
| | NeoCryl XK-190 | Acryl | 0 | | | | | | | | | | | |
| | BONRON PS-001 | Acryl | 3 | | | | | | | | | | | |
| | neocryl A1125 | Acryl | 13 | | | | | | | | | | | |
| | TAKELAC W-6110 | Urethane | 20 | | | | | | | | | | | |
| | ELITEL KZT-9204 | polyester | 19 | | | | | | | | | | | |
| | Joncryl ECO 2124 | Acryl-styrene | -35 | | | | | | | | | | | |
| | NE2260 | Acryl-styrene | 10 | | | | | | | | | | | |
| | ACRIT UW-550CS | Acryl-styrene | 4 | | | | | | | | | | | |
| | J-140A | Acryl-styrene | 5 | | | | | | | | | | | |
| Wax | AQUACER531 | | | 1.0 | 1.0 | 1.0 | 1.0 | 1.0 | 1.0 | 1.0 | 1.0 | 1.0 | 1.0 | 1.0 |
| Surfactant | BYK345 | | | 3.0 | 3.0 | 3.0 | 3.0 | 3.0 | 3.0 | 3.0 | 3.0 | 3.0 | 3.0 | 3.0 |
| | Dynol604 | | | | | | | | | | | | | |
| Solvent | Propylene glycol | | | 350 | 350 | 35.0 | 35.0 | 35.0 | 35.0 | 35.0 | 35.0 | 35.0 | 35.0 | 350 |
| Water | | | | 47.0 | 47.0 | 47.0 | 47.0 | 47.0 | 47.0 | 47.0 | 47.0 | 47.0 | 47.0 | 47.0 |
| Slip angle | | | | 126 | 22.7 | 22.1 | 20.9 | 23.4 | 21.7 | 21.2 | 20.6 | 19.0 | 19.4 | 20.6 |
| Discharge stability | | | | ○ | ○ | ○ | ○ | ○ | ○ | ○ | ○ | ○ | ○ | ○ |
| Abrasion resistance | | | | A | A | A | A | A | A | A | A | A | A | A |

**[Table 2]**

| | | | | Example | | | | | | | | | | |
|---|---|---|---|---|---|---|---|---|---|---|---|---|---|---|
| | Product name of resin | Type of resin | Tg | 1-22 | 1-23 | 1-24 | 1-25 | 1-26 | 1-27 | 1-28 | 1-29 | 1-30 | 1-31 | 1-32 |
| | Carboset GA7439 | Acryl | 31 | | | | | | | | | | | |
| | MOWINYL 6899D | Acryl | 48 | | | | | | | | | | | |
| | MOWINYL 6969D | Acryl | 73 | | | | | | | | | | | |
| | NeoCry XK-190 | Acryl | 80 | | | | | | | | | | | |
| | JE-1056 | Acryl | 82 | | 14.0 | 14.0 | 14.0 | 14.0 | 5.0 | 14.0 | 4.0 | 31.0 | 14.0 | 14.0 |
| | MOWINYL 66810 | Acryl | 110 | | | | | | | | | | | |
| | TAKELAC W-6061 | Urethane | 25 | | | | | | | | | | | |
| | TAKELAC W-5661 | Urethane | 70 | | | | | | | | | | | |
| | TAKELAC WS4022 | Urethane | 115 | | | | | | | | | | | |
| | Sancure 815 | Urethane | 161 | | | | | | | | | | | |
| | Sancure777F | Urethane | 162 | | | | | | | | | | | |
| | ELITEL KZT-8803 | polyester | 61 | | | | | | | | | | | |
| | ELITEL KZT-3556S | polyester | 81 | | | | | | | | | | | |
| | NeoCryl A-2092 | Acryl-styrene | 8 | | | | | | | | | | | |
| | JONCRYL PDX-7430 | Acryl-styrene | 30 | | | | | | | | | | | |
| Resin | QE-1042 | Acryl-styrene | 53 | | | | | | | | | | | |
| | NeoCryl A-639 | Acryl-styrene | 62 | | | | | | | | | | | |
| | JONCRYL PDX-7538 | Acryl-styrene | 75 | | | | | | | | | | | |
| | JONCRYL PDX-7696 | Acryl-styrene | 86 | | | | | | | | | | | |
| | NeoCryl A-662 | Acryl-styrene | 95 | | | | | | | | | | | |
| | KE-1048 | Acryl-styrene | 96 | | | | | | | | | | | |
| | NeoCryl A-2091 | Acryl-styrene | 98 | 14.0 | | | | | | | | | | |
| | NeoCryl XK-190 | Acryl | 0 | | | | | | | | | | | |
| | BONRON PS-001 | Acryl | 3 | | | | | | | | | | | |
| | neocryl A1125 | Acryl | 13 | | | | | | | | | | | |
| | TAKELAC W-6110 | Urethane | 20 | | | | | | | | | | | |
| | ELITEL KZT-9204 | polyester | 19 | | | | | | | | | | | |
| | Joncryl ECO 2124 | Acryl-styrene | -35 | | | | | | | | | | | |
| | NE2260 | Acryl-styrene | 10 | | | | | | | | | | | |
| | ACRIT UW-550CS | Acryl-styrene | 4 | | | | | | | | | | | |
| | J-140A | Acryl-styrene | 5 | | | | | | | | | | | |
| Wax | AQUACER531 | | | 1.0 | 1.0 | 1.0 | 1.0 | 1.0 | 1.0 | 1.0 | 1.0 | 1.0 | 1.0 | |
| Surfactant | BYK345 | | | 3.0 | 3.5 | | 3.5 | 20 | 2.5 | | 3.0 | 3.0 | | 30 |
| | Dynol604 | | | | | 3.0 | | | | 0.5 | | | | |
| Solvent | Propylene glycol | | | 350 | 300 | 25.0 | 200 | 30.0 | 35.0 | 35.0 | 35.0 | 35.0 | 35.0 | 350 |
| Water | | | | 47.0 | 51.5 | 57.0 | 61.5 | 53.0 | 56.5 | 49.5 | 57.0 | 300 | 500 | 48.0 |
| Slip angle | | | | 22.6 | 22.9 | 22.9 | 22.9 | 22.9 | 22.9 | 22.9 | 22.9 | 22.9 | 22.9 | 23.6 |
| Discharge stability | | | | ○ | ○ | ○ | ○ | ○ | ○ | ○ | ○ | Δ | Δ | ○ |
| Abrasion resistance | | | | A | A | A | A | A | B | A | C | A | A | C |

**[Table 2 Continuation]**

| | | | | Comparative Example | | | | | | | | |
|---|---|---|---|---|---|---|---|---|---|---|---|---|
| | Product name of resin | Type of resin | Tg | 1-1 | 1-2 | 1-3 | 1-4 | 1-5 | 1-6 | 1-7 | 1-8 | 1-9 |
| | Carboset GA7439 | Acryl | 31 | | | | | | | | | |
| | MOWINYL 6899D | Acryl | 48 | | | | | | | | | |
| | MOWINYL 6969D | Acryl | 73 | | | | | | | | | |
| | NeoCry XK-190 | Acryl | 80 | | | | | | | | | |
| | JE-1056 | Acryl | 82 | | | | | | | | | |
| | MOWINYL 66810 | Acryl | 110 | | | | | | | | | |
| | TAKELAC W-6061 | Urethane | 25 | | | | | | | | | |
| | TAKELAC W-5661 | Urethane | 70 | | | | | | | | | |
| | TAKELAC WS4022 | Urethane | 115 | | | | | | | | | |
| | Sancure 815 | Urethane | 161 | | | | | | | | | |
| | Sancure777F | Urethane | 162 | | | | | | | | | |
| | ELITEL KZT-8803 | polyester | 61 | | | | | | | | | |
| | ELITEL KZT-3556S | polyester | 81 | | | | | | | | | |
| | NeoCryl A-2092 | Acryl-styrene | 8 | | | | | | | | | |
| | JONCRYL PDX-7430 | Acryl-styrene | 30 | | | | | | | | | |
| | QE-1042 | Acryl-styrene | 53 | | | | | | | | | |
| | NeoCryl A-639 | Acryl-styrene | 62 | | | | | | | | | |
| | JONCRYL PDX-7538 | Acryl-styrene | 75 | | | | | | | | | |
| | JONCRYL PDX-7696 | Acryl-styrene | 86 | | | | | | | | | |
| Resin | NeoCryl A-662 | Acryl-styrene | 95 | | | | | | | | | |
| | KE-1048 | Acryl-styrene | 96 | | | | | | | | | |
| | NeoCryl A-2091 | Acryl-styrene | 98 | | | | | | | | | |
| | NeoCryl XK-190 | Acryl | 0 | 14.0 | | | | | | | | |
| | BONRON PS-001 | Acryl | 3 | | 14.0 | | | | | | | |
| | neocryl A1125 | Acryl | 13 | | | 14.0 | | | | | | |
| | TAKELAC W-6110 | Urethane | -20 | | | | 14.0 | | | | | |
| | ELITEL KZT-9204 | polyester | 19 | | | | | 14.0 | | | | |
| | Joncryl ECO 2124 | Acryl-styrene | -35 | | | | | | 14.0 | | | |
| | NE2260 | Acryl-styrene | -10 | | | | | | | 14.0 | | |
| | ACRIT UW-550CS | Acryl-styrene | 4 | | | | | | | | 14.0 | |
| | J-140A | Acryl-styrene | 5 | | | | | | | | | 14.0 |
| Wax | AQUACER531 | | | 1.0 | 1.0 | 1.0 | 1.0 | 1.0 | 1.0 | 1.0 | 1.0 | 1.0 |
| Surfactant | BYK345 | | | 3.0 | 3.0 | 3.0 | 3.0 | 3.0 | 3.0 | 3.0 | 3.0 | 3.0 |
| | Dynol604 | | | | | | | | | | | |
| Solvent | Propylene glycol | | | 35.0 | 35.0 | 35.0 | 35.0 | 35.0 | 35.0 | 35.0 | 35.0 | 35.0 |
| Water | | | | 47.0 | 47.0 | 47.0 | 47.0 | 47.0 | 47.0 | 47.0 | 47.0 | 47.0 |
| Slip angle | | | | 52.8 | 54.1 | 36.0 | 42.0 | 45.4 | 33.8 | 31.1 | 28.4 | 28.0 |
| Discharge stability | | | | ○ | ○ | ○ | ○ | ○ | ○ | ○ | ○ | ○ |
| Abrasion resistance | | | | A | A | A | A | A | A | A | A | A |

In the tables, "AQUACER 531" is polyethylene wax emulsion manufactured by BYK-Chemie. In the tables, "BYK345" is a silicone (silicon) surfactant manufactured by BYK-Chemie. In the tables, "Dynol 604" is 2,5,8,11-tetramethyl-6-dodecyne-5,8-diol, ethoxylate manufactured by Evonik Industries Ag.

The above tables demonstrate that the overcoat inks of Examples containing (a) a resin having a glass transition temperature of 20°C or more and/or (b) a styrene-acrylic resin having a glass transition temperature of 6°C or more have a slip angle of less than 28 and can form overcoat layers with higher slipperiness than that of the overcoat inks of Comparative Examples on surfaces of recorded matters. Moreover, the overcoat inks of Examples containing 5% by mass or more of a resin in a total mass of the overcoat inks were capable of forming overcoat layers having a higher slipperiness and higher abrasion resistance than that of the overcoat ink of Example 1-27 containing less than 5% by mass of a resin in a total mass of the overcoat ink.

2. Preparation of water-based ink and pretreatment ink Materials were mixed at rates (unit: % by mass) shown in the tables below and stirred at room temperature (20 to 25°C) for 1 hour. Then, it was confirmed that there was no dissolving residue. Then, the resulting solutions were filtered through a membrane filter to thereby prepare pretreatment inks and water-based inks, which were measured for static surface tension.

Note that, the static surface tension was measured by a Wilhelmy method (model: DY-300, manufactured by Kyowa Interface Science Co., Ltd) at a measurement temperature of 25°C.

**[Table 3]**

| | | Pretreatment ink A | | | | | | | | | | | | | Pretreatment ink B | | | |
|---|---|---|---|---|---|---|---|---|---|---|---|---|---|---|---|---|---|---|
| | | A-1 | A-2 | A-3 | A-4 | A-5 | A-6 | A-7 | A-8 | A-9 | A-10 | A-11 | A-12 | A-13 | B-1 | B-2 | B-3 | B-4 |
| Water-soluble solvent | 1,2-Butanediol | 15.00 | | | | | | | | 15.00 | 25.00 | 10.00 | 10.00 | 10.00 | | | | |
| | 1,2-Pentanediol | | 15.00 | | | | | | 15.00 | | | | | | | | | |
| | 1,2-Hexanediol | | | 15.00 | | | | | | | | | | | | | | |
| | Propylene glycol | | | | 15.00 | | | | | | | | | | | | | |
| | 3-Methoxy-1-butanol | | | | | 15.00 | | | | | | 10.00 | 15.00 | 15.00 | | | | |
| | 1,5-Pentanediol | | | | | | 15.00 | | | | | | | | | | | |
| | 1,3-Propanediol | | | | | | | 15.00 | | | | | | | | | | |
| | Glycerin | | | | | | | | | | | | | | 15.00 | | | |
| | Triethylene glycol monoethyl ether | | | | | | | | | | | | | | | 15.00 | | |
| | Trimethylolpropane | | | | | | | | | | | | | | | | 15.00 | |
| | N-hydroxyethylene urea | | | | | | | | | | | | | | | | | 15.00 |
| Surfactant | OLFINE E-1010 | 1.00 | 1.00 | 1.00 | 1.00 | 1.00 | 1.00 | 1.00 | 1.00 | | | | | | 1.00 | 1.00 | 1.00 | 1.00 |
| | BYK345 | | | | | | | | | 2.00 | 2.00 | 2.00 | 2.00 | | | | | |
| Resin | HYDRAN CP-7050 | 3.00 | 3.00 | 3.00 | 3.00 | 3.00 | 3.00 | 3.00 | 3.00 | 3.00 | 3.00 | 3.00 | 3.00 | 3.00 | 3.00 | 3.00 | 3.00 | 3.00 |
| Reactant | UNISENCE KHE100L | 1.50 | 1.50 | 1.50 | 1.50 | 1.50 | 1.50 | 1.50 | | 1.50 | 1.50 | 1.50 | 1.50 | 1.50 | 1.50 | 1.50 | 1.50 | 1.50 |
| | Calcium acetate | | | | | | | | 1.50 | | | | | | | | | |
| Water | | 79.50 | 79.50 | 79.50 | 79.50 | 79.50 | 79.50 | 79.50 | 79.50 | 78.50 | 68.50 | 73.50 | 68.50 | 70.50 | 79.50 | 79.50 | 79.50 | 79.50 |
| Evaluation | Contact angle [° ] | 14.8 | 8 | 10.3 | 17.5 | 3.6 | 21.7 | 19.4 | 13.3 | 8.7 | 11.8 | 2.4 | 2.4 | 23.4 | 8.7 | 64.3 | 25.6 | 28.9 |
| | Permeation time [seconds] | 8 | 6 | 8 | 12 | 6 | 16 | 10 | 6 | 5 | 11 | 5 | 5 | 11 | 23 | 16 | 30 | 21 |
| | Evaluation criteria for permeability | A | A | A | B | A | C | B | A | A | B | A | A | B | D | C | E | D |
| | Solid filling | B | A | B | C | A | C | C | B | A | B | A | A | C | D | D | E | E |

In the table, "OLFINE E1010" is an acetylene glycol surfactant manufactured by Nissin Chemical Industry Co., Ltd.

In the table, "BYK345" is a silicone (silicon) surfactant manufactured by BYK-Chemie.

In the table, "HYDRAN CP-7050" is a cationic urethane resin emulsion manufactured by DIC Corporation.

In the table, "UNISENCE KHE100L" is a water-soluble quaternary ammonium salt resin manufactured by SENKA corporation.

**[Table 4]**

| | | Water-based ink A | | | | | | | | | | | | Water-based ink B | | | |
|---|---|---|---|---|---|---|---|---|---|---|---|---|---|---|---|---|---|
| | | A-1 | A-2 | A-3 | A-4 | A-5 | A-6 | A-7 | A-8 | A-9 | A-10 | A-11 | A-12 | B-1 | B-2 | B-3 | B-4 |
| Water-soluble solvent (Partition coefficient) | 1,3-Propanediol (-1.093) | 35.00 | | | | | | 25.00 | | 35.00 | 15.00 | 51.00 | 35.00 | | | | |
| | 1,2-Propanediol (-1.008) | | 35.00 | | | | | | | | | | | | | | |
| | Triethylene glycol monoethyl ether (-0.656) | | | 35.00 | | | | | | | | | | | | | |
| | 1,2-Butanediol (-0.499) | | | | 35.00 | | | 10.00 | 25.00 | | | | | | | 5.00 | |
| | Diethylene glycol monoethyl ether (-0.421) | | | | | 35.00 | | | | | | | | | | | |
| | 3- M ethyl- 1,3- butanediol (-0.329) | | | | | | 35.00 | | | | | | | | | | |
| | 1.2-Pentanediol (0.011) | | | | | | | | | | | | | 35.00 | | | 25.00 |
| | 3-Methoxy -1-butanol (0.070) | | | | | | | | 10.00 | | | | | | 35.00 | 20.00 | 10.00 |
| Surfactant | BYK345 | 2.00 | 2.00 | 2.00 | 2.00 | 2.00 | 2.00 | 2.00 | 2.00 | | 2.00 | 2.00 | | 2.00 | 2.00 | 2.00 | 2.00 |
| | Dynol604 | | | | | | | | | 0.90 | | | | | | | |
| Resin | MOWINYL 6820 | 7.00 | 7.00 | 7.00 | 7.00 | 7.00 | 7.00 | 7.00 | 7.00 | 7.00 | 7.00 | 7.00 | 7.00 | 7.00 | 7.00 | 7.00 | 7.00 |
| WAX | AQUACER531 | 0.90 | 0.90 | 0.90 | 0.90 | 0.90 | 0.90 | 0.90 | 0.90 | 0.90 | 0.90 | 0.90 | 0.90 | 0.90 | 0.90 | 0.90 | 0.90 |
| Dispersing agent | D I S PER B Y K - 1 9 0 | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 |
| Pigment | Cyan pigment | 350 | 3.50 | 3.50 | 3.50 | 3.50 | 3.50 | 3.50 | 3.50 | 3.50 | 3.50 | 3.50 | 3.50 | 3.50 | 3.50 | 3.50 | 3.50 |
| Water | | 51.10 | 51.10 | 51.10 | 51.10 | 51.10 | 51.10 | 51.10 | 51.10 | 52.20 | 71.10 | 35.10 | 53.10 | 51.10 | 51.10 | 61.10 | 51.10 |
| Evaluation | Contact angle [° ] | 21.1 | 23.5 | 18.9 | 24.0 | 20.2 | 22.5 | 18.9 | 21.5 | 24.5 | 19.8 | 28.6 | 30.2 | 18.0 | 28.3 | 35.0 | 23.2 |
| | Permeation time [seconds] | 26 | 22 | 16 | 20 | 18 | 21 | 18 | 15 | 27 | 23 | 29 | 30 | 10 | 8 | 11 | 8 |
| | Evaluation criteria for permeability | A | B | C | B | C | B | C | C | A | B | A | A | D | E | D | E |
| | Solid filling | A | A | C | B | C | B | B | C | B | B | C | C | D | E | D | E |

In the table, "cyan pigment" is C.I. Pigment Blue 15:3 (PB 15:3).

In the table, "BYK345" is a silicone (silicon) surfactant manufactured by BYK-Chemie.

In the table, "Dynol 604" is 2,5,8,11-tetramethyl-6-dodecyne-5,8-diol, ethoxylate manufactured by Evonik Industries Ag.

In the table, "MOWINYL 6820" is anionic acrylic resin emulsion manufactured by Japan Coating Resin Corporation.

In the table, "AQUACER 531" is polyethylene wax emulsion manufactured by BYK-Chemie.

In the table, "DISPERBYK-190" is a water-soluble polymer dispersing agent manufactured by BYK-Chemie.

A black water-based ink, a magenta water-based ink, and a yellow water-based ink were obtained in the same manner as for the above-described cyan water-based ink, except that Carbon black (C.I. Pigment Black 7), C.I. Pigment Red 122 (PR122), and C.I. Pigment Yellow 74 (PY74) were used, respectively, instead of C.I. Pigment Blue 15:3. Note that, the water-based inks containing different color materials from the cyan water-based ink had the same static surface tension as that of the cyan water-based ink.

### 3. Evaluation of ink set

The ink set including a pretreatment ink, a water-based ink, and an overcoat ink was evaluated for smear. Specifically, a pretreatment ink, a water-based ink, and an overcoat ink were discharged in this order on a surface of OK board (coated board paper manufactured by Ojimateria Co., ltd) serving as a substrate to form a recorded matter having a desired printing pattern at a conveying rate of the substrate (recording medium) of 50 m/min using an inkjet printing device having a configuration as shown in FIG. 1 using a line head (one-pass) method.

### (Evaluation of smear)

The recorded matter was visually evaluated for a smear according to evaluation criteria below. Evaluation criteria A: Sharp image with no smear. B: Sharp image with only a slight smear. C: Practically usable image with some smears. D: Non-sharp image with smears. E: Significant smears.

### (Evaluation of cissing)

The recorded matter was visually evaluated for cissing according to evaluation criteria below. Evaluation criteria A: No cissing was observed, a printing surface was determined to be sufficiently filled with the ink. B: Only slight cissing was observed, but a printing surface was filled. C: Some cissing was observed, but a printing surface was filled to the extent practically usable. D: Cissing was observed, and a printing surface was insufficiently filled. E: Significant cissing was observed.

### (Evaluation of permeability)

A pretreatment liquid was applied at 5 g/m² on a substrate with a bar coater and then time that it took for the liquid to be removed from a surface of the substrate to completely expose the substrate was measured. Evaluation criteria
A: Less than 10 seconds
B: 10 seconds or more and less than 15 seconds
C: 15 seconds or more and less than 20 seconds
D: 20 seconds or more and less than 25 seconds
E: 25 seconds or more

### (Evaluation of abrasion resistance)

The recorded matter was evaluated for abrasion resistance. Specifically, using a color fastness rubbing tester (AB-301 manufactured by TESTER SANGYO CO,. LTD.), a recording surface of the recorded matter was brought in contact with a piece of KANAKIN No. 3 (cotton) and reciprocated 100 times with a load of 500 g applied. The thus-obtained sample was evaluated according to evaluation criteria below. Evaluation criteria A: The coated film (overcoat layer or water-based ink layer) was not peeled. B: A peeled area of the coated film(overcoat layer or water-based ink layer) was less than 10% of a total tested area. C: A peeled area of the coated film(overcoat layer or water-based ink layer) was 10% or more and less than 200 of a total tested area. D: A peeled area of the coated film(overcoat layer or water-based ink layer) was 200 or more and less than 500 of a total tested area. E: A peeled area of the coated film(overcoat layer or water-based ink layer) was 500 or more of a total tested area.

### (Evaluation of gloss)

Gloss at 60° was measured using a gloss meter (RHOPOINT IQs, manufactured by Rhopoint Instruments) and evaluated according to the following criteria. A: Gloss value of 35 or more
B: Gloss value of 30 or more and less than 35
C: Gloss value of 25 or more and less than 30
D: Gloss value of 20 or more and less than 25
E: Gloss value of less than 20

### (Slip angle)

A slip angle on a surface of an overcoat layer of the recorded matter was measured using a friction tester AN-S2 manufactured by Toyo Seiki Seisaku-sho Ltd.

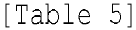

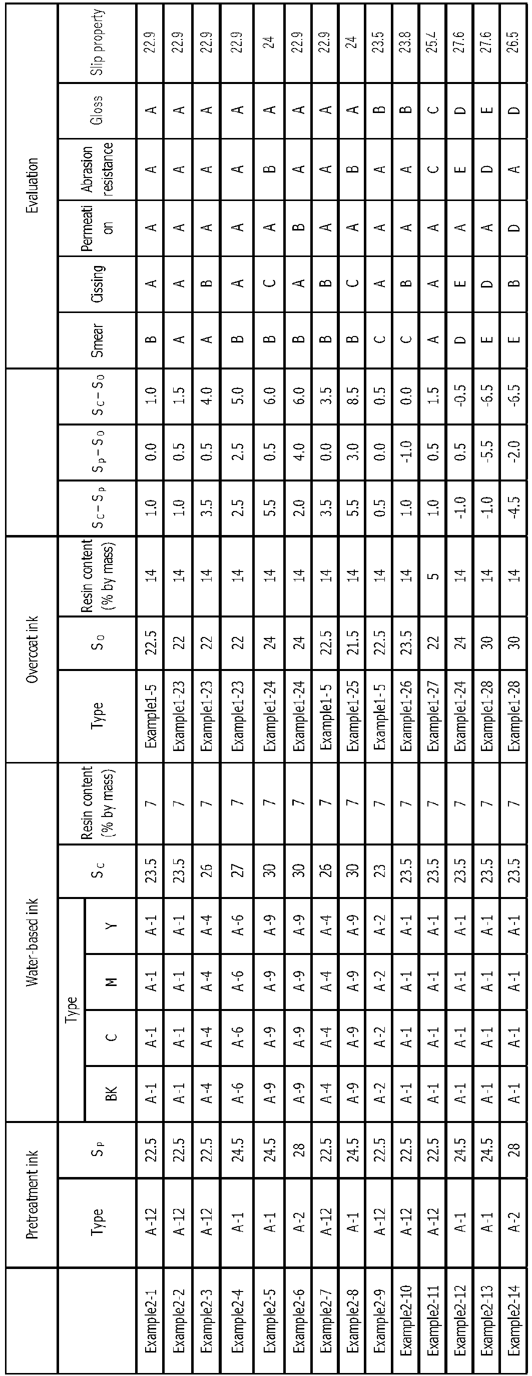

The results in Table 5 demonstrate that the ink sets of Examples 2-1 to 2-11 that include the overcoat ink including a resin having a predetermined range of a glass transition temperature and that is composed of the inks having static surface tensions controlled to fall within a predetermined range can form an overcoat layer with high slipperiness on a surface of a recorded matter and can effectively prevent a water-based ink from smearing even in the case of higher speed printing using an inkjet recording method.

In particular, the ink set of Example 2-2 having a value of S_{P} - Sₒ of 0.2 or more was capable of more effectively preventing the water-based ink from smearing as compared to the ink sets of Examples 2-1, 2-7, 2-9, and 2-10. Furthermore, the ink set of Example 2-2 having a value of S_{P} - Sₒ of 3.5 or less was capable of more effectively preventing the water-based ink from smearing as compared to the ink set of Examples 2-6.

Furthermore, the ink set of Example 2-2 having a value of Sc - Sₚ of 3.0 or less was capable of more effectively preventing the water-based ink from smearing as compared to the ink set of Example 2-3.

Furthermore, the ink set of Example 2-2 having a value of Sc - Sₒ of 4.5 or less was capable of more effectively preventing the water-based ink from smearing as compared to the ink sets of Examples 2-5, 2-6, and 2-8.

Furthermore, the ink set of Example 2-12 in which a content of the resin included in the water-based ink is lower than that of the resin included in the overcoat ink had a lower slip angle than that of the ink set of Example 2-12. This demonstrates that when the content of the resin included in the water-based ink is lower than that of the resin included in the overcoat ink, slipperiness of the overcoat layer can be prevented from decreasing, resulting in an ink set further exerting the effects of the present invention. EXPLANATION OF REFERENCE NUMERALS

- 1: Device
- 11: Pretreatment ink
- 12: Water-based ink
- 13: Overcoat ink
- 21: Pretreatment ink discharge unit
- 22: Water-based ink discharge unit
- 23: Overcoat ink discharge unit
- 31: Drying mechanism

## Claims

1. An overcoat ink for forming an overcoat layer on a surface of a recorded matter, the ink at least comprising:
a resin;
an organic solvent; and
water,
the resin comprising (a) a resin having a glass transition temperature of 20°C or more and/or (b) a styrene-acrylic resin having a glass transition temperature of 6°C or more.

2. The overcoat ink according to claim 1, wherein the resin is comprised in an amount of 5% by mass or more and 30% by mass or less relative to a total amount of the overcoat ink.

3. The overcoat ink according to claim 1 or 2, wherein the ink is discharged onto the surface of the recorded matter by an inkjet method.

4. The overcoat ink according to any one of claims 1 to 3, further comprising a surfactant,
the surfactant comprising a silicone surfactant and/or an acetylene glycol surfactant.

5. The overcoat ink according to any one of claims 1 to 4, further comprising a wax.

6. An ink set, comprising:
the overcoat ink according to any one of claims 1 to 5; and
a water-based ink.

7. The ink set according to claim 6, wherein each of the inks comprised in the ink set have static surface tensions satisfying a relationship below:
Static surface tension of overcoat ink Sₒ < Static surface tension of water-based ink S_{c}.

8. The ink set according to claim 6 or 7, further comprising a pretreatment ink.

9. The ink set according to claim 8, wherein each of the inks comprised in the ink set have static surface tensions satisfying a relationship below:
Static surface tension of overcoat ink S_{O} ≤ Static surface tension of pretreatment ink S_{P} < Static surface tension of water-based ink Sc.

10. An inkjet recording method using the ink set according to any one of claims 6 to 9, comprising
discharging each of the inks comprised in the ink set onto a substrate by an inkjet method.

11. The inkjet recording method according to claim 10, further comprising drying each of the inks comprised in the ink set after the ink is discharged.

12. A method for producing a recorded matter using the ink set according to any one of claims 6 to 9, comprising discharging each of the inks comprised in the ink set onto a substrate by an inkjet method.

13. A device configured to discharge the ink set according to any one of claims 6 to 9 by an inkjet method.

14. The device according to claim 13, comprising a drying mechanism configured to dry each of the inks comprised in the ink set after the ink is discharged.

15. A recorded matter, comprising:
a recording medium;
a water-based ink layer formed of a water-based ink; and
an overcoat layer formed on the water-based ink layer using the overcoat ink according to any one of claims 1 to 5.
